# EUROPEAN PATENT SPECIFICATION

(11) **EP 2 780 900 B1**
(45) Date of publication and mention of the grant of the patent: **29.04.2020**
(21) Application number: 12826671.5
(22) Date of filing: 14.11.2012
(51) Int. Cl.: G08B 13/14, G08B 21/24, G06F 21/88, H04W 4/029, H04W 12/12

(54) **SYSTEMS AND METHODS FOR RECOVERING LOW POWER DEVICES**
SYSTEME UND VERFAHREN ZUR WIEDERHERSTELLUNG NIEDRIGLEISTUNGSVORRICHTUNGEN
SYSTÈMES ET PROCÉDÉS DE RÉCUPÉRATION DE DISPOSITIFS DE FAIBLE PUISSANCE

(30) Priority: 14.11.2011 US 201161559452 P
(43) Date of publication of application: 24.09.2014
(73) Proprietor: Yougetitback Limited, Cork (IE)
(72) Inventor: FITZGERALD, William, Cork (IE); LYNN, William, Cork (IE); BERMINGHAM, Peter, Cork (IE)
(74) Representative: Rupprecht, Kay
(86) International application number: PCT/IB2012/002980
(87) International publication number: WO 2013/072774

(56) References cited:
- EP-A2- 2 264 657
- DE-A1-102008 048 011
- US-A1- 2006 267 575
- US-A1- 2008 309 485
- US-A1- 2009 079 567
- US-A1- 2009 207 014
- US-A1- 2011 210 849

## Description

### Field of the Invention

Certain embodiments relate to systems and methods for altering the function of an electronic device in response to the device being lost, stolen or used in an unauthorized manner. The altered functionality could facilitate (1) the return of the device, and/or (2) altering the operation of the device. Certain embodiments may be particularly relevant when the device is in a low power or zero power state.

### Background of the Invention

Today, the use of electronic devices is widespread. Such devices can increase a user's productivity and quality of life, but they are susceptible to loss, theft, or unauthorized use. Examples of such devices are cellular phones, portable digital assistants (PDAs), digital cameras, and laptop computers. These devices often carry private, confidential and/or difficult-to-replace data, and the loss of such data further compounds the loss of the electronic device since, while an electronic device that has been lost or stolen can be physically replaced, oftentimes the data stored on such a device is confidential and/or irreplaceable.

Additionally, the authorized user (which may or may not be the owner) of a lost or stolen device may have to deal with ramifications, such as the misuse of information if an unauthorized user (as used herein, "unauthorized user" means anyone than the authorized user or someone authorized by the authorized user to use the device) gains access to information stored on the device. Further, it is not uncommon for hours or even days to elapse before the owner or authorized user of such a device discovers the loss, and during that time, an unauthorized user may be accessing sensitive data, misappropriating information, or running up charges for goods or services on the authorized user's accounts.
The US 2008/0309485 discloses a location mechanism for a mobile device. A lost mobile device determines where to send a response by using the caller ID of a sending device. The lost mobile device may determine a return communication address (e.g., a telephone number, email address, etc.) associated with the mobile device that sent a coded text message.
The US 2011/210849 A1 it is known that user is using a communication device to find a lost object, for instance a key that is attached to a wireless device. The user has control of his communication device, and it is not lost or otherwise missing, as he uses it to locate the lost object that is connected to the wireless communication device.
From the US 2009/079567 A1 discloses a mobile device, such as a mobile phone, that is capable of causing an alarm to be played to a user, to prevent a loss thereof. Advantageously, the mobile device also moves to a locked state in anticipation of being lost, thereby to prevent unauthorized use thereof. DE 10 2008 048011 A1 describes a key finder based on a receiver/transmitter integrated with the key and a mobile device for calling the key and determining its position by means of GPS and its fine position by means of Bluetooth.
US 2006/267575 A1 discloses an apparatus and method for preventing theft in automotive vehicle service centers. The apparatus includes at least one portable tool and a controller. The portable tool includes circuitry configured to communicate with the controller. The portable tool further includes anti-theft circuitry, which is configured to disable the portable tool if no communication occurs between the portable tool and the controller for a predetermined time period. The US 2009/207014 A1 discloses a portable proximity alarm apparatus comprising a Bluetooth system and an alarm monitors the presence of a portable electronic device equipped with a compatible transceiver within range and alarms when that device leaves its range. Both these documents are two of several examples of prior art systems in which the querying and/or the queried unit enter or exit a power saving (or low power) mode upon the occurrence of various conditions.
The EP 2 264 657 A2 describes an object management system that includes at least one object identification device to be secured to an associated object. The object identification devices provide radio frequency signals containing object identification codes. The system includes at least one user identification device providing a radio frequency signal containing a user identification code and a control unit having a reader for receiving and reading the signals provided by the user identification devices and the object identification devices.

### SUMMARY OF THE INVENTION

The present invention is directed to a method of retrieving a lost power-limited device defined by the features of claim 1, and a respective system according to claim 5. Preferred embodiments are defined in the subclaims. Accordingly, the present invention provides one or more of the following functions: (1) enhancing the likelihood that the device is recovered by providing information to assist the unauthorized user in returning the device, (2) altering the function of the device (optionally including the prevention of access to information on the device), and (3) obtaining information about the unauthorized user to improve the chance that the unauthorized user will be identified and both the unauthorized user and device located. Further, a system and method of the invention may provide a rapid response to alert the authorized user that the device has either been misplaced or stolen.

Both the foregoing summary and the following detailed description are exemplary and explanatory only and are not restrictive of the invention as claimed.

### BRIEF DESCRIPTION OF THE DRAWINGS

A more complete understanding of the present invention may be derived by referring to the detailed description and claims when considered in connection with the following illustrative figures.
Figure 1 is a flow diagram depicting an exemplary process of the present invention.
Figure 2 is a flow diagram depicting an exemplary process of the present invention with respect to a device on which telephone calls can be made.
Figure 3 is a flow diagram depicting substeps of step 120 according to an exemplary method of the invention.
Figure 4 is a flow diagram depicting substeps of step 120 according to an exemplary method of the invention.
Figure 5 is a flow diagram depicting substeps of step 120 according to an exemplary method of the invention.
Figure 6 is a diagram showing various functionalities of the invention, one or more of which may be included in step 140.
Figure 7 is a diagram depicting various functionalities of the invention, one or more of which may be included in step 680.
Figure 8 is a block diagram depicting an exemplary system according to various aspects of the present invention.
Figures 9-16 depict exemplary notification measures that can be provided on a mobile computing device such as a laptop computer in accordance with the present invention.
Figures 17-25 depict exemplary notification messages that may be displayed on a cellular phone, a PDA, or handheld mobile device.
Figures 26-37 depict exemplary screens and processes associated with a host server as exemplified by embodiments of the present invention.
Figures 38-58 illustrate installation and registration of a software application downloaded onto a mobile device.
Figures 59-64 illustrate embodiments of the present invention showing a process for uninstalling the application from a mobile device.
Figure 65 illustrates a system according to certain embodiments of the present invention.
Figures 66-69 illustrate methods according to certain embodiments of the present invention.

### DETAILED DESCRIPTION OF EXEMPLARY EMBODIMENTS

As used herein, the term "mobile device," "mobile electronic device," or "device" generally refers to any electronic device capable of being lost or stolen. A mobile device may be any mobile electronics device, such as a stand-alone device such as a laptop computer, a desktop computer, a tablet computer, a mobile subscriber communication device, a mobile phone, a personal digital assistant (PDA), a data tablet, a digital camera, a video camera, a video game console, a media player, a global positioning system (GPS), Universal Serial Bus (USB) keys, mobile weapons, and combinations thereof. A mobile electronic device may also be any electronic device integrated with another system or device. For example, a stereo, global positioning system, or other electronic device contained within a vehicle may be monitored and protected in accordance with the present invention. Software to implement methods of the present invention can be (1) installed on, or (2) downloaded onto a mobile device indirectly or directly at any time by an authorized user through the Internet, SMS text message, or in any other suitable manner and at any suitable time for carrying out a method according to the invention. For example, the software may be installed on the device when purchased or downloaded after the device is purchased, or even after the device is lost or stolen. The mobile device may be insured against loss or theft, and systems and methods of the present invention may operate as part of, or in addition to, an insurance policy on the mobile device.

As used herein, the term "lost," can broadly refer to a device that has been taken by someone other than the owner, misplaced, mislaid, placed somewhere that the owner has forgotten, or moved to a location unknown to the owner. The term "lost" can also broadly refer to a device that is lost, stolen or otherwise out of the control of an authorized user or owner of the device. For example, if the relative of the owner of the device takes the device, the device may be "lost" with respect to the owner of the device, when the owner does not know the location of the device.

An authorized user of a mobile device may qualify for a lower insurance premium if the insured mobile device is protected by a lockout or recovery service as provided by embodiments of the present invention. In another embodiment, an insurance company may mandate recovery or lockout services be provided with an insured device where a claim against the policy may result in replacement for lost or stolen mobile devices. Therefore, embodiments of the present invention assist with preventing insurance fraud. For example, if a parent buys a new phone and insures the phone against loss or theft, the parent may desire to give the insured phone to one of his/her children and file an insurance claim to replace the donated phone, claiming it as a lost or stolen device, thus avoiding the cost of purchasing a new phone. The present invention may be used to prevent such a fraudulent claim, by, for example, disabling use of the alleged lost or stolen phone, detecting attempted use of the alleged lost or stolen phone, or tracking location or users of the alleged lost or stolen phone.

In one embodiment, a mobile device operating in conjunction with the present invention includes a wireless transceiver to communicate with other systems and devices through a wireless system such as a wireless mobile telephony network, General Packet Radio Service (GPRS) network, wireless Local Area Network (WLAN), Global System for Mobile Communications (GSM) network, Personal Communication Service (PCS) network, Advanced Mobile Phone System (AMPS) network, and/or a satellite communication network. Mobile devices operating in conjunction with the present invention may also communicate with other systems and devices through any other type of connection, such as a wired Internet connection, a wireless Internet connection, a cellular telephone network connection, a wireless LAN connection, a wireless WAN connection, an optical connection, a USB connection, a mobile device synchronization port connection, a power connection, and/or a security cable.

Systems and methods of the present invention may be employed as part of a subscriber-based service to help protect and recover a wide variety of different mobile devices. Authorized users can be linked to multiple mobile devices using a unique identifier for each device. Any suitable identifier may be provided, such as the serial number of the mobile device (or a component thereof), or a numeric, alphabetic, alphanumeric, or other identifier. The identifier can be used to verify the identity of authorized users associated with the device, as well as to monitor the mobile device and provide for its recovery should it be lost or stolen. In one embodiment of the present invention, for example, the identifier and information for associated authorized users may be stored in a storage medium (such as a memory on the mobile device or a central server) for future reference.

Moreover, a system and method according to the invention may have a different response for different inputs or conditions, including the sensing of varying threat levels. For example, a laptop sensing that it is in a prohibited area (such as outside of a building to which it is assigned or in a foreign country) might prevent access with one or more encryption techniques, delete data or corrupt the hard drive to make data retrieval difficult or impossible. The same laptop, upon receiving a signal that it is lost within a building to which it is assigned could simply provide notification describing how to return the laptop.

Any combination and/or subset of the elements of the methods depicted herein may be practiced in any suitable order and in conjunction with any suitable system, device, and/or process. The methods described and depicted herein can be implemented in any suitable manner, such as through software operating on the mobile device and a host server. The software may comprise computer-readable instructions stored in a medium (such as the memory of the mobile device or host server) and can be executed by one or more processors to perform the methods of the present invention.

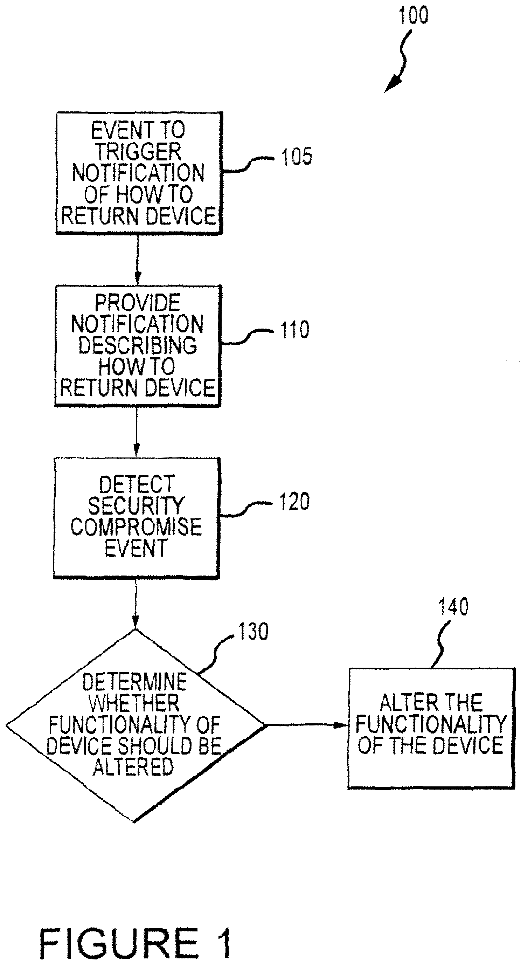

Turning now to the figures, where the purpose is to describe preferred embodiments of the invention and not to limit same, exemplary methods according to various aspects of the present invention are depicted in Figures 1 -7.

In method 100 illustrated in Figure 1, a notification is provided by a mobile device to an authorized user (110) describing how to return the mobile device. As used herein, "unauthorized user" means any person other than the authorized user. The notification can be provided in any number of ways and be triggered by any suitable event. For example, the notification may be a visual display or an audio signal, such as a voice. The notification should provide adequate information to the unauthorized user to enable the unauthorized user to return the device, and could include one or more of a phone number, address or email address. The notice could also offer a reward for return of the device.

The notice could be triggered in any suitable manner. For instance, the authorized user could send a signal to the device to display the notice, or the authorized user could contact a service that would send a signal to the device to activate the notice. The notice could also be displayed automatically, for example, if the wrong password were keyed in a predetermined amount of times or if the device sensed it was in a certain geographical area. Any other suitable self-triggering event could also be utilized. The notice may, in certain embodiments, be triggered by the device itself. For example, the notice may be triggered when the battery reaches a critical low point. In another example, the notice may be triggered in a case where the phone had shut down because of low battery but has awakened itself on, for example, an alarm event by using its reserve power. This could be at a time in the future. For example, an alarm event can be scheduled for twenty-four hours from the power down event. In another case, the self-triggering event may occur when a device is separated from its cover. The cover may include a near field communication

Another and optional feature of the device is detection of a security compromise event (120) and a determination (130) of whether the function of the device should be altered in response to the security compromise event. If appropriate, the functionality of the device is altered (140) if a security compromise event (including the device being lost or stolen).

### PROVIDING NOTIFICATION DESCRIBING HOW TO RETURN THE MOBILE DEVICE

In an exemplary process 100 according to the present invention depicted in Figure 1, an event 105 triggers a notification to be provided 110 by the device describing how to return the device. The notification may be provided in any manner, such as by using a display, microphone, or other user interface feature(s) of the mobile device. The notification may include any symbols, characters, numbers, graphics, sounds (including recorded voice messages and/or music), and/or any other indicia to aid in describing how to return the device (for example a message displayed on a screen).

The notification may include, for example, one or more of a telephone number for a service providing recovery instructions or the telephone number of the authorized user, a turn-in location or address, instructions to activate a feature of the mobile device to initiate a return process, a web address for a service providing recovery instructions, and/or a clickable link to a website comprising recovery instructions. The notification may also include a message that a reward is available for turning in the device to a recovery service. In one embodiment of the present invention, the notification is displayed on the login screen (including the mechanism for returning the device) such that it is the first information seen by a user before the user can access the device. If an authorized user (such as the owner) fears they have lost control of the device they can remotely activate the application on the mobile device and make sure that access is restricted to only showing a notification and details on how to return the device. One benefit of this approach is the preservation of the confidential nature of the information located on the mobile device, essentially protecting sensitive information from unauthorized access. An innocent finder of the mobile device is also able to return the device without having to bypass or break the password on the mobile device to determine the identity of the authorized user.

When the notification is provided a separate signal or message that the mobile device has been lost or stolen. The notification can help an unauthorized user of the mobile device return it to its authorized user, and the notification is likely to increase the probability that the unauthorized user will do so, since he/she is provided with the appropriate instructions or information. Additionally, the conspicuousness of the notification may also deter an unauthorized user who is a thief from stealing the mobile device or attempting to keep, use, or sell the mobile device.

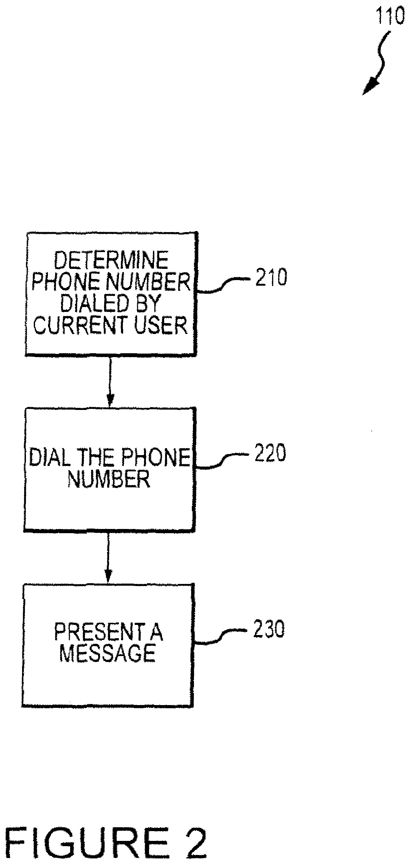

The notification may be provided to any person (such as the unauthorized person currently in possession of the mobile device), as well as other individuals, systems, and devices in communication with the mobile device. In one exemplary embodiment of the present invention, referring to Figure 2, providing a notification (1 10) describing how to return a mobile device (such as a mobile phone) may include: determining a phone number (210) dialed by the current unauthorized user of the mobile device, calling the phone number (220), and presenting a message (such as pre-recorded, text or message from a live person) (230). The message may include any desired information, such a notice that the mobile device has been reported lost or stolen, and/or instructions to assist in initiating return of the mobile device.

Alternate embodiments may include presenting an SMS text message, an email message (e.g., sent to an email address of the current user), a sequence of dual-tone multi-frequency (DTMF) tones, and/or any other message type. This allows the mobile device to alert the unauthorized user in possession of the mobile device that he/she is not authorized to use the device and/or provides instructions on how to return the device. This may expedite the return of the mobile device, as well as to deter individuals from stealing or withholding the device from its rightful owner.

The mobile device may include a read-only memory. For purposes of the present application, a read only memory (also known as a "ROM") includes not only non-modifiable memories such as mask ROMs and one-time programmable PROMs, but also persistent memories that may not be directly or indirectly modified through the user interface of a mobile device. Such persistent memories may include such storage devices such as field programmable ROMs, EPROMs, EEPROMs, FLASH memory, magnetic storage devices, optical storage devices, or other storage devices. In various embodiments of the present invention, an application may reside in a read-only memory of the mobile device detects that a security compromise event has occurred. In selected instances, the application may not be terminated by a current user of the mobile device if the current user is not the authorized user, providing additional security to prohibit unauthorized users from tampering with security protocols.

The mobile device may present an automated message with a variety of content to achieve any desired result to mitigate loss of control. For example, but not by way of limitation, the mobile device when detecting that a security event has occurred, may present an automated message to a current user of the mobile device, wherein the automated message comprises at least one of a notification: that the mobile device has been lost or stolen; that the current user may press any button to initiate contact with a security authority; that the current user of the mobile device should return the device; commanding the current user to return the device; that a reward is offered for the prompt return of the mobile device; and providing instructions for return of the mobile device.

The notification may be provided using some or all of the user interface capabilities of the mobile device. For example, a notification for a laptop computer may include a large, message on the screen to draw the attention of observers that it is protected, and/or one or more sounds (including music, pre-recorded speech and alarm) played through the laptop's speaker. Similarly, a cell phone could present a text display and/or emit sounds to instruct the unauthorized user how to return the device or an alarm sound to attract attention to the unauthorized user and make it undesirable to keep the device. The notification may be presented through one or more of any other user interface feature(s) integrated with, or in communication with, the mobile device, such as a printer.

### DETECTING A SECURITY COMPROMISE EVENT

In the exemplary method shown in Figure 1, the mobile device detect that a security compromise event (120) has occurred. As used herein, a "security compromise event" generally refers to any situation where the mobile device (or any physical or functional portion thereof) is (or may be) outside the exclusive control of an authorized user, and a device may be able to detect multiple types of security compromise events, in which case the device may have different responses for different types of security compromise events.

A security compromise event may be actual (e.g., the mobile device has actually been stolen), or perceived (e.g., an authorized user is uncertain as to the status of the mobile device, but believes it may be lost or stolen). A security compromise event may include the loss of control of the mobile device by the authorized user, the theft of the mobile device, a loss of knowledge as to the whereabouts of the mobile device, the intrusion of an electronic threat (e.g., an electronic virus, an electronic worm, and/or an electronic trojan horse), the unauthorized access or attempted unauthorized access to private information in the mobile device, use of the mobile device in a manner not authorized by a wireless service provider, the device sensing it is in an unauthorized location, entering an incorrect password multiple times, any other event where compromise of the ownership or security of the mobile device is indicated.

A security compromise event may be detected by the mobile device itself, and may be also be reported by an authorized user directly to the device or indirectly such as through a security authority or other entity, system or device in communication with the mobile device.

The mobile device may detect a security compromise event in any manner, such as by receiving a message from an authorized user or a security authority (such as a governmental law enforcement organization, private security firm, and/or insurance agency), and in response to the message determining that a breach of security has occurred. The security authority may communicate with the mobile device in any desired manner, such as through software operating on a host server in communication with a database. As an example, an authorized user can report his/her mobile device is missing to the security authority and instruct the security authority to signal the mobile device of a security threat (i.e., the user believes the mobile device has been lost, stolen, or may otherwise be subject to unauthorized access). The functionality of the mobile device can then be altered as a result (140), as discussed further below.

In another embodiment, detecting, by the mobile device, that a security compromise event has occurred further comprises: obtaining, from a security authority, a pre-stored list of phone numbers characterizing allowable use of the mobile device; comparing a current phone number to the pre-stored list of phone numbers; and determining that the current phone number indicates that a call involving the current phone number is not authorized. In various embodiments, determining that the current phone number indicates that a call involving the current phone number is not authorized further comprises one of: determining: that the current phone number is a phone number associated with a call received by the mobile device; and the current phone number is not present within a first subset of the pre-stored list of phone numbers, the first subset comprising phone numbers associated with calls that may be received by the mobile device; or the current phone number is present within a second subset of the pre-stored list of phone numbers, the subset comprising phone numbers associated with calls that may not be received by the mobile device; and determining: that the current phone number is a phone number associated with a call placed by a current user of the mobile device; and the current phone number is not present within a third subset of the pre-stored list of phone numbers, the third subset comprising phone numbers associated with calls that may be placed by the mobile device; or the current phone number is present within a fourth subset of the pre-stored list of phone numbers, the fourth subset comprising phone numbers associated with calls that may not be placed by the mobile device. In other implementations, determining that the current phone number indicates that a call involving the current phone number is not authorized further comprises determining: that the current phone number is a phone number associated with a call received by the mobile device; and the current phone number is not present within a first subset of the pre-stored list of phone numbers, the first subset comprising phone numbers associated with calls that may be received by the mobile device; or the current phone number is present within a second subset of the pre-stored list of phone numbers, the subset comprising phone numbers associated with calls that may not be received by the mobile device.

Any notifications may be provided upon detecting a security compromise event, and in addition to other embodiments specified herein, a pre- designated contact may be notified that an unauthorized call has been received by the mobile device. Such a pre-designated contact may be identified by the authorized user at any time, such as during a registration process.

In another embodiment, determining that the current phone number indicates that a call involving the current phone number is not authorized further comprises determining: that the current phone number is a phone number associated with a call being placed by a current user of the mobile device; and the current phone number is not present within a third subset of the pre-stored list of phone numbers, the third subset comprising phone numbers associated with calls that may be placed by the mobile device; or the current phone number is present within a fourth subset of the pre-stored list of phone numbers, the fourth subset comprising phone numbers associated with calls that may not be placed by the mobile device. In the event that a security compromise event has been detected, the mobile device may request a PIN number from the current user; and if the PIN number matches a predetermined PIN number, the current user of the mobile device may be allowed to place the call. Instead of or in addition to the PIN, a security question may be used to challenge the user. The security question may be previously set by the user, or may be information that the system believes that the user should know.

The mobile device may authenticate the validity of a message from a security authority, such as by computing a digest of the message and comparing the digest value to a previously stored authorization digest value. The computed digest value may be produced by providing the received message to a hashing algorithm such as the MD5 or SHA-1 Secure Hashing Algorithm as specified in National Institute of Standards and Technology Federal Information Processing Standard Publication Number 180-1, the disclosure of which is incorporated by reference herein in its entirety. The authorization digest value can be any number, code, value, or identifier that allows a received message to be identified as a valid transmission from a security authority. The stored authorization digest value can be provided to the mobile device upon activation of a loss/theft recovery service, as well as in any other desired manner. Unless the authorization digest value matches the stored digest value, the message will not be authenticated and can be disregarded (if desired). A mobile device acting on a message from a security authority need not necessarily be predicated upon successful authentication of the message, however. The mobile device may authenticate the validity of the message in any other desired manner.

The mobile device may also authenticate the validity of a message from a security authority or other source by decrypting at least part of the message with a public key associated with the sender of the message as part of an asymmetric encryption algorithm. Asymmetric encryption algorithms and techniques are well known in the art. See, for example, RSA & Public Key Cryptography, by Richard A. Mollin, CRC Press, 2002, and United States Patent No. 4,405,829, issued September 20, 1983, the disclosures of which are fully incorporated by reference herein. In an illustrative example, if two parties (for example, "Alice" and "Bob") wish to communicate securely using public key cryptography, each party begins by generating a unique key pair, where one of the keys is a private key that is kept in confidence by that party, and the other key is a public key that may be publicly distributed, published only to a message recipient, or made available through a public key infrastructure. The key generation step need be done by a party only once, provided that the party's private key does not become compromised or known by another party. If Alice wants to send a message confidentially to Bob, she may use Bob's public key to encrypt the message, and once sent, only Bob can decrypt and view the message using Bob's private key. But if Alice also wanted Bob to have assurance that the message was in fact coming from her, she could further encrypt the message with her private key before sending, then when Bob's private key and Alice's public key are used to decrypt the message, Bob knows for certain that he was the intended recipient and that Alice was the one who originated the message, and Alice knows that only Bob will be able to decrypt and read her message.

Such a scheme may be utilized with embodiments of the present invention. In an embodiment, full two-way public encryption is used to authenticate that the sender is in fact the security authority (for example) and that the recipient of the message indicating a security compromise event has occurred is in fact the intended recipient. Alternatively, messages may be encrypted with only the private keys of the sending entity, and decrypted with the public keys to expedite processing time. Such encryption schemes assist with validation of security compromise event communications, both in providing validation of the source and destination of messages, as well as providing a means to security transmit commands to a compromised mobile device.

In alternate embodiment, encrypted or unencrypted data can be transmitted to and from the mobile device through an encrypted transmission protocol, such as the wireless encryption protocols (WEP, WPA and WPA2) associated with the IEEE 802.1 1 wireless protocols. Any number of other encryption methods can be used to encrypt data communicated to and from the mobile device in conjunction with the present invention.

A mobile device operating in conjunction with the present invention may receive information that a security compromise event has occurred from a security authority or other source using any number of messages in any format. For example, embodiments of the present invention may receive information in an SMS text message, a voice mail message, an email message, and/or a predetermined sequence of one or more DTMF tones. The message can be of any desired format. For example, the message can be included in a file having a tokenized format such as standard ASCII text format, or any other suitable standardized file format, such as an MS Word document, MS Excel file, Adobe PDF file, or binary picture file (JPEG, bitmap, etc.). The data within such a file can be ordered in any manner and have any suitable delimiters, notations, or other features. The message may also have a unique and/or propriety format.

In one embodiment, the message indicating a security compromise event occurred may be encoded in files such as binary picture files via steganographic techniques, so that any person viewing the file or picture may see an acceptable image while a hidden message is encoded in the data in the file and may be accessed by appropriate software techniques. For example, by sending a graphic image in a file that is named in a manner to solicit a user to open the message/file (for example, "HotJessica.JPG"), then the current user of the mobile device may open the file which then triggers software on the mobile device to scan the image file, thereby extracting and decoding the steganographically encoded data from the image file. The mobile device may then interpret the decoded data, and if a lockdown event is indicated, the device may take predetermined actions to partially or completely disable use of the device in any of the manners described herein. The software on the mobile device may execute surreptitiously, whereby the application may execute forensic evidence gathering features such as taking a picture of the current user's face while the user is looking at the image file just opened while the current user is unaware that he/she is being photographed or otherwise logged. Other commands may be sent via encoded or concealed messages, such as commands resetting the password of the device to an alternate or more secure password.

The format of the message can also be based on the method by which the message is transmitted to the mobile device. For example, where the message is transmitted to the mobile device using a wireless telephone connection, the message can be formatted as an SMS text message. Similarly, the message may be formatted as an XML record, email, and/or facsimile. The message can include multiple formats and/or multiple messages, and may be formatted having different formats for transmission in a variety of methods or to a variety of different mobile devices. A message received from a security authority, host server, authorized user, or other source may also include other information, such as instructions for altering the functionality of the mobile device as discussed further below.

In one embodiment of the present invention, a mobile device may be configured to assume a low-power, quiescent, or standby state, whereby the device may receive notifications from an authorized user or server such as a server administered by a security authority. Upon receiving such notification, the mobile device may take action at an appropriate time, based on contents of the notification. The mobile device may transition from a standby state to poll a server to determine whether a notification is waiting, and if so, downloads and acts upon the contents of the notification. Additionally or alternatively, the mobile device has a buffering provision that is capable of receiving notifications transmitted by a server or security authority, and acting upon the contents of the message at an appropriate time, such as when the message is received or at a predetermined time interval.

A mobile device may also detect a security compromise event by determining that the mobile device has been disassociated with a designated companion device. The mobile device may be associated with any desired type of device(s). For example, a mobile telephone may be a companion device to another mobile telephone. The two mobile telephones may be associated through a wireless connection (such as a Bluetooth connection or infrared (IR) or near field communication), and the loss of the wireless connection may be used to trigger a security compromise event. Similarly, a security compromise event can be triggered when a mobile device is separated from a plurality of companion devices.

The mobile device may determine that it has been disassociated with the companion device in any desired manner, such as by measuring a power level of a wireless signal transmitted by the companion device, and determining that the measured power level has decreased below a predetermined threshold level. Additionally, the mobile device can determine it has been disassociated with the companion device by transmitting a message to the companion device and determining that a message was not received from the companion device that satisfies a predetermined confirmation criterion (e.g., an expected acknowledgement transmission). Additionally, the mobile device can determine it has been disassociated with the companion device where it is unable to establish a communications link with the companion device, or where the companion device sends a signal to the mobile device indicating that access to the mobile device should be restricted. The mobile device may determine it has been disassociated with the companion device when an amount of incident light illuminating at least one surface of the mobile device has varied from a predetermined threshold range. For example, if the mobile device is removed from a companion device such as a purse, carrying case, holster or briefcase, the increase in ambient light on at least one surface of the mobile device could be detected by an included sensor, indicating the device has been removed from a desired location. Similar approaches may include activating a security event check when, a case enclosing the mobile device is opened or if a light sensor in a mating surface between the mobile device and its companion device suddenly detects light when the two devices are disconnected or undocked. In another embodiment, a near field communication chip can be included with the mobile device, the companion device, or both, and the security event check can be triggered when communication with the near field communication chip(s) is interrupted, for example, for a predetermined amount of time. Alternatively, a radio frequency identification (RFID) tag can be used instead of or in addition to a near field communication chip.

The mobile device may be associated with a companion device in any desired manner, such as by pairing the mobile device with the companion device via a wired link and/or a wireless link. Any desired wireless link and communications protocol may be used to pair a mobile device with a companion device. For example, a wireless link may include an ISO 14443 protocol, an ISO 18000-6 protocol, a Bluetooth protocol, a Zigbee protocol, a Wibree protocol, an IEEE 802.15 protocol, an IEEE 802.1 1 protocol, an IEEE 802.16 protocol, an ultra-wideband (UWB) protocol; an IrDA protocol, and combinations thereof and infrared and near field communication (NFC). Likewise, a wired link may be implemented to pair a mobile device with a companion device, such as by using a computer network connection, a USB connection, a mobile device synchronization port connection, a power connection, and/or a security cable.

A security compromise event may be associated with a change in the hardware of the mobile device. For example, a security compromise event may be determined when an identifier of a hardware identity module (such as a universal subscriber identity module and/or a removable user identity module) in communication with the mobile device does not match one or more predetermined authorized identifiers. Any desired identifier may be used in conjunction with the present invention, such as an electronic serial number, a local area identity identifier, an integrated circuit identifier, an international mobile subscriber identifier, an authentication key identifier, and/or an operator-specific emergency number identifier.

The hardware identity module identifier may be transmitted to a host server, stored in a storage medium (such as the memory of the mobile device or host server), or processed in any other desired manner. For example, the identifiers associated with hardware of a mobile device (e.g., hard drive, SIM card, or other hardware) can be used to determine whether an unauthorized user is attempting to circumvent software or hardware security protocols protecting the mobile device. The hardware identity module identifier (as well as any other data used in conjunction with the present invention) may be stored in any suitable manner, such as by using a memory storage device integrated with, or in communication with, the mobile device. The hardware identity module may also be encrypted, hidden, or protected in any other desired manner.

A security compromise event can be based on a change in a single hardware component of a mobile device, as well as on an overall hardware configuration of the mobile device. For example, the hardware configuration for a mobile device such as a laptop computer may include the identities of a particular hard drive, battery, RAM, BIOS, and other components of the laptop. The hardware configuration for the laptop can be stored (e.g., by a central server and/or the mobile device) and then compared against the current hardware configuration for the laptop (e.g., periodically and/or upon the occurrence of an event, such as a change in a hardware component). If the current hardware configuration has changed from the stored configuration beyond a predetermined threshold (e.g., more than two individual components are different), a security compromise event can be triggered. This allows a security compromise event to be issued where a thief may be swapping out components of a stolen mobile device in an attempt to circumvent security measures associated with (or stored on) the swapped components. Changes in the hardware configuration of a mobile device (such as changes in a SIM card in communication with the mobile device) can be tracked over time and reported to a security authority or authorized user to help locate the mobile device. Swapping or exchanging a SIM card may trigger a security compromise event.

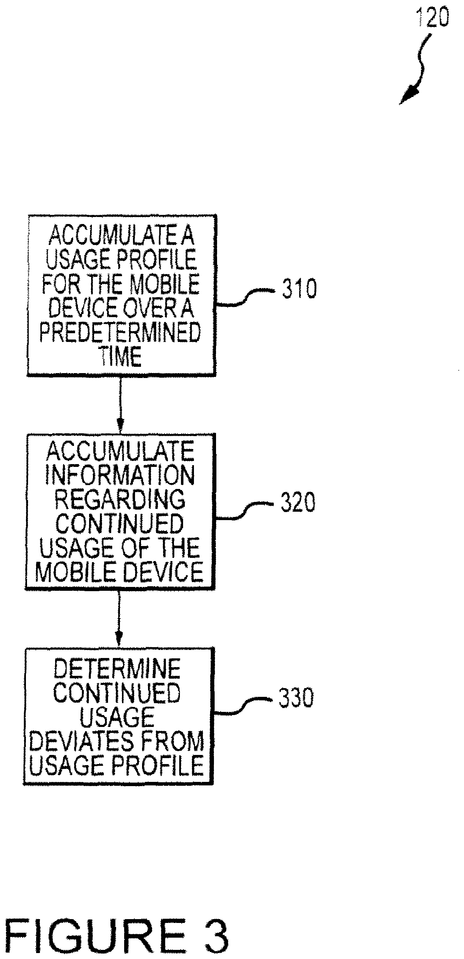

A security compromise event may be determined based on the use of the mobile device and/or the behavior of the current user. For example, referring to Figure 3, determining a security compromise event (120) may include accumulating a usage profile of the mobile device over a predetermined time period (310), accumulating information regarding continued usage of the mobile device (320), and determining that the continued usage deviates from the usage profile by a predetermined threshold (330).

The usage profile and the accumulated information may include any desired information about how the mobile device is used, such as a ratio of the number of calls placed from numbers residing within a contact list stored in the mobile device to numbers not residing within the contact list, the time of day that one or more calls were placed by the mobile device, a mean time interval between button presses, a pressed button type, a mean pressure exerted when pressing buttons, a number of times within a predetermined time interval that a password was input incorrectly, a number of consecutive times that a password was input incorrectly, and combinations thereof. The usage profile of an authorized user can then be compared to the accumulated information in order to determine whether or not the authorized user is still in control of the device. The mobile device may take any desired action to verify the current user is authorized to use the mobile device, such as prompting the current user to enter a password, and preventing further use of the device until the password is correctly entered.

The usage profile can be compiled over any desired time period(s). The time period may include a fixed period of time, or may be dynamically determined (e.g. - shifting in time as the mobile device is utilized). The predetermined time period can be specified by an authorized user of the mobile device, as well as determined by the mobile device itself. The predetermined time period can be based on any desired criteria, such as the manner in which the device is used and/or on the amount of information needed to compile the usage profile. Likewise, the period of time in which information about the continued usage of the mobile device can be accumulated may be specified in the same manner as that of the usage profile.

The accumulated continued usage information and the usage profile may be compared to determine the degree to which the continued usage deviates from the usage profile. A predetermined threshold may be selected according to any desired criteria to determine whether the continued usage is indicative of unauthorized use. For example, if the continued usage includes a significant number of calls outside the time range calls are usually made in the usage profile, the continued usage may be indicative of unauthorized use. Similarly, the time interval between button presses (i.e., the speed the current user is using the mobile device), the types of buttons pressed, the pressure exerted when pressing the buttons, the number of times (including consecutive times) a password is input incorrectly, and other events may be indicative (alone or in combination) of unauthorized use.

A combination of events may be weighted such that the occurrence of a security compromise event is based on a predetermined voting threshold. Individual events may be given more significance than other events, such that only a repeated occurrence of a particular event deviates from the predetermined threshold, while a single occurrence of another event deviates from the threshold. For example, a call outside the usage profile's normal time range may need to occur a total of four times before the predetermined threshold is exceeded, while the entering of an incorrect password two times in succession deviates from the threshold. Similarly, an incorrect password entry in combination with two calls outside the normal time range in the usage profile can deviate from the predetermined threshold. In another example, trickle charge methods, such as wireless charging stations, can be given a weight based on how frequently they are used. Events may be weighted or scored for the predetermined voting threshold in any desired manner.

A security compromise event may be determined based on the failure of a user to provide the proper biometric data. In one embodiment of the present invention, for example, a biometric measurement of a current user of the mobile device is obtained, and the biometric measurement is compared to a previously stored reference value. A security compromise event can then be determined where the biometric measurement exceeds a predetermined threshold variance from the previously stored reference value. The security compromise event may be based on any number of biometric measurements from the current user of a mobile device, such as a fingerprint scan, an iris scan, a retina scan, a voice sample, a breath sample, SpO2 (blood oxygen level), heart rate, and/or a photograph of a portion of the body of the current user of the mobile device. In addition or alternatively, a security compromise event may occur and be identified when, for example, a phone has been used for mobile banking in a way that the user would not normally use it. For example, if a user normally uses the phone for mobile banking not more than once a week, when three payments are made within one hour, a security compromise event may be identified. The software may respond to this event in various ways. For example, the software may sever a link between the device and the bank. Alternatively, the software may prevent the current user, who may be the authorized user, from processing additional payments without entering a four digit personal identification number (PIN) to unlock their device. In another alternative, the software may limit the user to making one payment per twenty-four hours without the PIN, and may require the PIN for each subsequent payment within a twenty-four period. In yet another embodiment, the PIN may be required when a companion device is not present, but the PIN may not be required when the companion device is present. In another example, the software may automatically provide a physical location of the device to the bank when a suspicious transaction is identified, either based on the criteria mentioned above or criteria used by the bank.

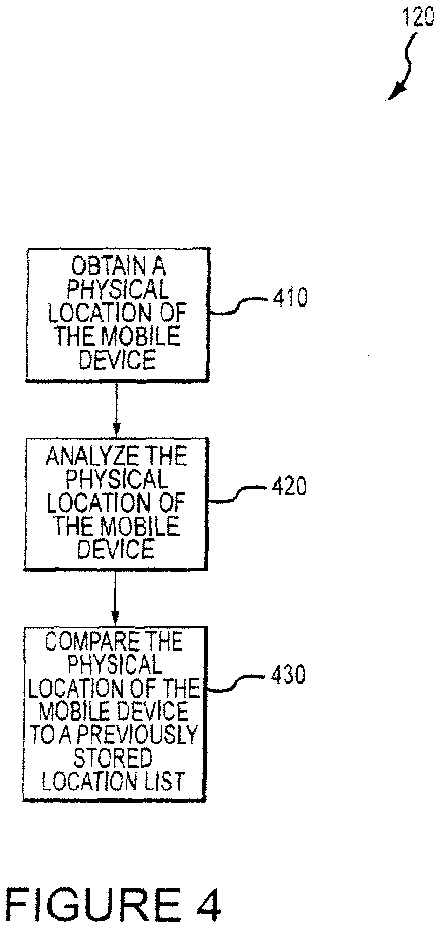

A security compromise event may be determined based on the location of the mobile device. For example, referring now to Figure 4, determining a security compromise event (120) may include obtaining a physical location of the mobile device (410), analyzing the physical location of the mobile device to determine that the device is located in an unauthorized area (420), and comparing the physical location of the mobile device to a previously stored location list (430).

The physical location of the mobile device may be obtained in any manner. For example, the location of the mobile device may be ascertained using a global positioning system (GPS), through the triangulation of a signal emitted by the mobile device, through an Internet protocol (IP) address and/or traceroute, or in any other manner. A global positioning system may include, for instance, a receiver that detects signals transmitted by transmission sources with known transmission timing and/or known location, and through analyzing the received time-encoded signals at the mobile device. The mobile device may also ascertain its location with respect to the transmission sources. The transmission sources may be terrestrial, mobile, space-based, airborne, or any combination thereof. In one embodiment, the mobile device may ascertain its location on the surface of the earth by receiving and interpreting geolocation signals received from satellites in orbit about the earth. In another embodiment, the global positioning system may include a collection of terrestrial antennas and receivers that receive a signal transmitted from the mobile device, and by analyzing the angle of arrival, time of arrival, and/or time differential of arrival of the mobile device's signal, the location of the mobile device may be ascertained via conventional multilateration approaches. Alternatively, the mobile device may receive one or more signals from known terrestrial transmitting sources such as cellular base station antennae, and through analyzing the received signals, compute its location with respect to the known terrestrial transmitting sources. The terrestrial transmitting sources may also include access points of wireless local area networks, WiFi networks, personal hotspots, and the like.

The area a mobile device is authorized to operate in may be defined in any manner. For example, the area may be a geographical area defined by a boundary, an area corresponding to a postal code, and/or an area corresponding to a telephone area code. The area may include any number of separate individual areas. An area may be defined based on where the mobile device may operate (i.e. "whitelisting"), as well as on where the mobile device may not operate (i.e. "blacklisting").

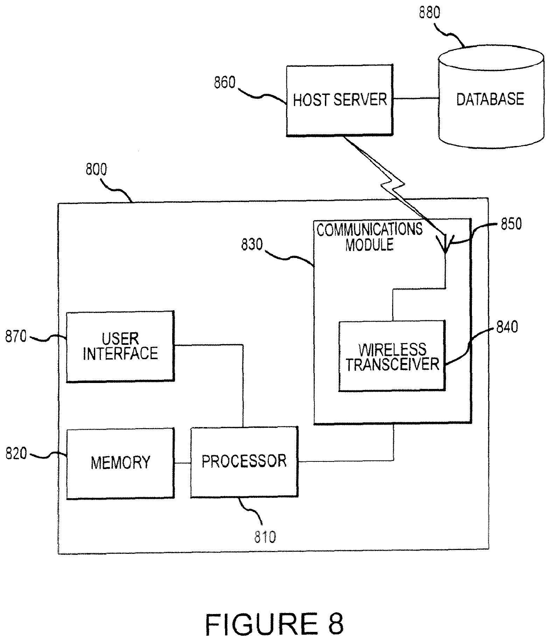

The location of the mobile device may be compared to a list that defines one or more locations where the mobile device is authorized to be operated, one or more locations where the mobile device is not authorized to be operated, one or more locations where functionality of the mobile device is at least partially restricted, and/or combinations thereof. The list may be defined by an authorized user of the device and/or a security authority. In one exemplary embodiment of the present invention, a central server (such as host server 860 depicted in Figure 8) monitors the location of the mobile device and compares the device's location to a location list previously stored in a database to determine if a security compromise event has occurred based on the location of the mobile device, and if the functionality of the device should be modified as a result. Among other things, this embodiment allows employers, parents, and other "super-users" of mobile devices to define boundaries in which the mobile devices should operate when in the hands of employees or children.

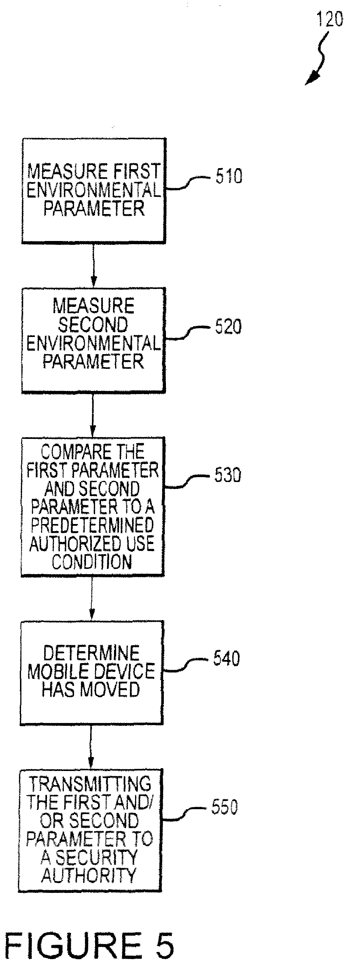

A security compromise event may be determined based on the location of the mobile device. For example, referring now to Figure 5, determining a security compromise event (120) may include measuring a first environmental parameter at a first time point (510), measuring a second environmental parameter at a second time point (520), comparing the first environmental parameter and second environmental parameter to a predetermined authorized use condition (530), determining that the mobile device has been moved from a first location (540), and transmitting at least one of the first and second measured environmental parameter to a security authority (550).

As used herein, an "environmental parameter" generally includes any parameter pertaining to the mobile device's environment. The mobile device can measure any desired environmental parameter in any desired format, such as an image taken by the mobile device. Digital cameras (including cameras inside other devices, such as mobile phones), and other devices with imaging capability may thus be used to take an image of the mobile device's environment, including physical objects and people around the mobile device. Such images can then be used to identify the location of the mobile device and/or the individual(s) responsible for taking or withholding the mobile device from its authorized user(s).

An environmental parameter may also include information from or about systems and devices in communication with the mobile device. In one embodiment of the present invention, for example, a wireless receiver in communication with the mobile device can be activated and used to sense one or more wireless network addresses from one or more signals received by the mobile device at different points in time. The network addresses sensed at different points in time can be compared to determine whether the sensed network addresses differ, and thus determine if the mobile device has moved.

An environmental parameter may further include geolocation information. The geolocation information may be measured from a global positioning system (GPS) in communication with the mobile device, as well as from any other desired source. In one exemplary embodiment of the present invention, the mobile device may receive a signal comprising geolocation information and decode location signals received at the different points in time. The locations corresponding to the signals measured at different times may be compared to determine whether the location of the mobile device has changed, as well as whether the distance between two sampled locations exceeds a predetermined threshold. Any number of location samples can be similarly measured and compared, either to an initial location or to subsequently-measured locations. The predetermined threshold distance can be configured by a user, a security authority, and/or automatically by the mobile device. This embodiment thus allows the movement of a mobile device to be monitored and a security compromise alert issued if it moves more than a predetermined distance.

In various embodiments of the invention, security compromise events may be detected when an unauthorized user attempts to tamper with a security provision of the mobile device. For example, conditions leading to a determination of tampering may include determining that an unauthorized user attempted to mask the reported location of the mobile device; attempted to re-route an electronic address in the mobile device; attempted to bypass a password prompt provided by the mobile device; attempted a brute force password attack on the mobile device; attempted to install applications intended to thwart operation system security, and combinations thereof. A user may specify criteria to define conditions that may indicated a security compromise event has occurred. In this context, detecting, by the mobile device, that a security compromise event has occurred further comprises obtaining from the authorized user a set of criteria indicating unauthorized use of the mobile device; and determining that at least one of the criteria indicating unauthorized use has occurred. The criteria may include a broad range of information such as, for example: a maximum number of calls that may be placed to numbers not included in a pre- stored authorized number list; a maximum number of calls that may be received by numbers not included in the pre-stored authorized number list; and the situation where a call is being placed to a country code not included in the pre-stored authorized number list. The set of criteria indicating unauthorized use of the mobile device may be stored in any suitable location, such as in the mobile device or in a database associated with a security authority.

### ALTERING THE FUNCTIONALITY OF THE MOBILE DEVICE

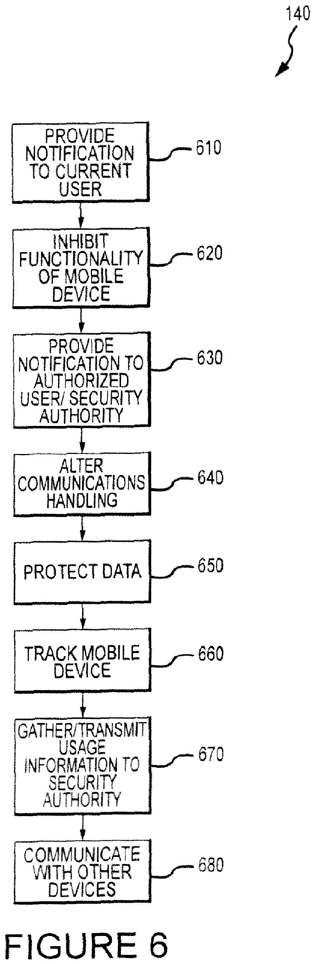

In the exemplary process depicted in Figure 1, a determination is made as to whether the function of the device should be altered in response to the security compromise event (130), and the functionality of the mobile device altered accordingly (140). The functionality of a mobile device can be altered in any manner and to achieve any purpose, such as to mitigate the harm arising from the compromised status of the device, gather evidence to apprehend and convict a thief, as well as to encourage/incentivize the return of the device to the proper owner. Referring to Figure 6, altering the functionality of the mobile device (140) may include providing a notification to the current user (610), inhibiting the functionality of the mobile device (620), providing a notification to an authorized user and/or security authority (630) (the security authority may include, among other things, a security agent of a financial institution, such as a bank), altering the manner in which communications to and from the mobile device are handled (640), protecting data in the mobile device (650), tracking the mobile device (660), gathering and transmitting information on the usage of the mobile device to a security authority (670), and communicating with other devices (680).

The functionality of a mobile device can be altered in any manner in response to a security compromise event, including partially or completely disabling features of the device and/or providing functionality not available prior to the security compromise event. In one embodiment of the present invention for example, the functionality of the mobile device can be altered to present an automated message to the current user of the mobile device (610). The automated message may be in any format and may contain any desired information. For example, the automated message may notify the current user that the mobile device has been lost or stolen, that a reward is offered for the prompt return of the mobile device, and/or provide instructions for returning the mobile device to the authorized user. The automated message may also notify the current user that any button may be depressed on the mobile device to initiate the recovery process, and/or that a phone number need not be entered to contact a party to return device to its rightful owner. In such an instance, the mobile device may accept a single button press to initiate contact with a security authority or the authorized user to begin the recovery process. The message may be presented in any manner, such as an audio message, a textual message, and/or a video message. In one embodiment of the present invention, for example, an SMS text message is transmitted by a security authority to a mobile device. The text message is decoded and a command sent to an application residing on the mobile device, such as a web browser, a text editor, graphic image displayer, a message screen, or a bitmap displayer and/or any other application capable of displaying a notification. The command may, for example, display a pre- stored message or image, instructing the user in regards to returning the device to the authorized user. The application may reside on a hardware component within the mobile device, such as a SIM card installed in a mobile phone or laptop computer. The message may also be presented at any desired time or in response to any desired event, such as when the current user is attempting to utilize the mobile device (e.g., by placing a call on a mobile telephone). For example, the message may be presented upon startup of the device. In this manner, a user that has found a lost device may obtain information regarding returning the device even where the device has not established a connection to a host server such as one operated a security authority.

The functionality of the mobile device may be altered to inhibit a user's ability to utilize the mobile device (620). For example, a sequence of DTMF tones (e.g., for a mobile telephone) or an unpleasant sound may be played over a speaker in the mobile device while the current user is attempting to use the mobile device. Additionally, the illumination level of a display on the mobile device may be altered to frustrate the use of the mobile device (e.g., by decreasing the illumination level) and/or to draw attention to the mobile device (e.g., by increasing the illumination level) so that bystanders may notice the device or its unauthorized use. In addition, an aural may be played over a signal over a loudspeaker of the mobile device, and the aural signal may comprise a variety of information including a pre-recorded message such as a human voice notifying listeners that the mobile device has been lost or stolen; a pre-recorded scream; verbal instructions regarding how to return the mobile device to at least one of the authorized user and the security authority; or an alarm signal.

A predetermined set of features of the mobile device can be inhibited in response to a security compromise event, such as when the mobile device is reported stolen or lost by the authorized user. In one embodiment of the present invention, for example, the functionality of the mobile device is modified based on a list of features to be restricted upon occurrence of the security compromise event. The list of features may be defined in any manner, such as by an authorized user accessing a web interface and selecting features to be disabled if the mobile device is lost or stolen. The list of features may then be transferred to, and stored by, the mobile device. One or more specifically configured lists of features for various security compromise events may be provided to the mobile device, for example one list may indicate that or more of the features on the list could be disabled if the phone is reported stolen, while a less restrictive list may be provided for when the phone is reported as misplaced. In this manner, multiple feature modification lists for the mobile device may provide for event-appropriate responses based on the type of security compromise that has occurred. In another embodiment, a default security compromise action list is executed by the mobile device if the mobile device detects a security compromise event and no other list of restricted features has been transferred to the mobile device by the authorized user or a verified security authority. For example, but not by way of limitation, a default security compromise action list defines common features of a mobile device that need to altered when control of the mobile device is lost. Alternately, the list of features may be identified by a user through a software interface on the mobile device itself.

The functionality of the mobile device may be modified from a first set of features to a second set of features based on the occurrence of a security compromise event. The differences between the first feature set and second feature set can be based on any desired criteria, such as the context of use of the mobile device. For example, the feature sets may be based on a level of security desired for the mobile device, an application the mobile device is being used for, the location of the mobile device, or any other contextual factor(s).

The functionality of the mobile device may be inhibited in any other desired manner. For example, a mobile phone may be prevented from placing phone calls, sending emails or text messages, or engaging in other forms of communication. In the case where the mobile device comprises a mobile telephone, the phone numbers that may be called from the mobile device can be restricted to a predetermined list of numbers, or to only one or more predetermined numbers within a contact list on the mobile phone. For example, a mobile device may be restricted to only allow emergency calls to be placed, and/or to place a call to a security authority (for example, a user may press a single key to place a call to the security authority). Additionally, DTMF tones can be played on a loudspeaker of the mobile device while the mobile phone is in use to interfere with the current user using the mobile phone. Similarly, frequent messages (e.g. a text message and/or audio message) can be provided, instructing the current user of a mobile device to contact a security authority to initiate return of the mobile device to the authorized user. The subscriber identity module (SIM) of a mobile phone can also be locked out until the user enters a personal unblocking code. The unblocking code may be known to the authorized user(s) prior to the occurrence of the security compromise event, or can be provided to the authorized user(s) by a security authority. Additionally, an authorized user(s) may unlock the mobile device through a host server such a server operated by a security authority, or by entering a PIN number or password corresponding with a PIN number or password that was furnished by the user during a registration process and stored in a database for unlock authentication purposes.. Any other functions of a mobile device can be disabled (in part or in whole), or interfered with, to diminish the usefulness of the mobile device to an unauthorized user.

The authorized user of the mobile device may also request to lock the device by using a web browser or other remote application to instruct a security authority to relay a command to lock the mobile device; and in this event message is formatted transmission to the mobile device, wherein the message comprises a command to be decoded by the mobile device. The command may instruct the mobile device to execute any desired function, including disabling at least one feature of the mobile device.

The functionality of the mobile device can be inhibited by requiring entry of a password before the mobile device may be used by a current user. Where an invalid password is entered, a delay may additionally be introduced before entry of another password may be attempted by the current user. In conjunction with requiring the password, selectable indicia (e.g., a web link and/or button on a display) may be provided that give instructions on how to return the mobile device. The instructions can be provided without the current user needing to enter a valid user id and password. Additionally, the current user may be prompted to enter his or her identification information, which is stored on the mobile device and transferred to a security authority when the mobile device has an opportunity to make a communications connection to the security authority. This may allow a security authority to locate an innocent finder of the device, as well as someone who stole the device. For example, but not by way of limitation, the prompt can include a message that notifies the current user of the device that they have won a substantial prize and need to take an action to redeem the prize offer. In such a case, the current user of a device may be solicited to provide information that could be used to redeem the spurious prize, but in fact is used to locate and or apprehend current user. Alternatively, or in combination, the current user of the mobile device may be sent a graphical image with a name or image that encourages the current user to open a message or file, and while looking at the file or image, a command is decoded from the image via steganographic techniques, whereby the command may be executed by the mobile device to mitigate the loss of control of the mobile device.

The mobile device can be significantly disabled or entirely shut down to prevent its use and help prevent an unauthorized user from attempting to circumvent security protections on the mobile device. In some cases, such as when information stored on the mobile device is sensitive, or when there is a very small likelihood of recovering the mobile device (or its data), it may be desirable to command the mobile device to perform a destructive function that renders the mobile device inoperable. The destructive function may include erasing and/or overwriting data and software stored on the mobile device. The destructive function may also include physically damaging the hardware of the mobile device, such as by commanding the mobile device to deliver an electric charge or current to damage an electronic component of the mobile device.

For example, when such a condition occurs, an integrated circuit within the mobile device could be rendered permanently inoperable. Alternatively, a component such as a fusible link which is designed to be electrically destroyed may be purposely blown by software in the mobile device, at which time the mobile device may be rendered inoperable, but repairable by a an authorized technician.. Further, the mobile device may execute an instruction to cause an internal circuit breaker in the mobile device trip, thereby rendering the mobile device at least temporarily inoperable, until the circuit breaker is reset by an authorized technician.

The functionality of the mobile device may be altered to send a message to an authorized user of the device, a security authority, or other recipient (630). The message may include any desired information, such as a phone number called by the mobile device, the current operational status of the mobile device, the location of the mobile device, a statement indicating that the mobile device has been removed from a predetermined location and/or is in motion, a date and time stamp indicating when the device was first used after occurrence of the security event, and/or instructions to call a security authority to initiate a recovery process. The mobile device can thus provide information on its use and location to aid a security authority or authorized user in finding the mobile device.

The authorized user(s) of the mobile device may not necessarily be aware that a security compromise event has occurred. In order to alert an authorized user that a security compromise event has occurred, a theft notification record for an authorized user can be stored at a central server as well as on the mobile device itself to allow the authorized user to be contacted and notified. The theft notification record can include any desired information regarding the authorized user, such as the authorized user's contact information and information that can be used to validate the authorized user's identity. A message to the authorized user may be in any format and may include any desired information. For example, a phone call can placed to a phone number specified in the theft notification record, whereupon audio instructions (from a live operator or pre-recorded) are provided to the authorized user regarding how to contact the current user of the mobile device to recover the mobile device. Likewise, a text message can be sent electronically, or a printed message may be sent by conventional mail, to an address specified in the theft notification record regarding how to contact the current user of the mobile device to recover it. The message may be provided by any system, device, or individual, such as a security authority monitoring the mobile device and/or the mobile device itself.

The functionality of the mobile device may be altered with regards to the handling of communications to and from the mobile device (640). In addition to prohibiting or restricting communications to and from the device as discussed above, communications from the device by an unauthorized user can be intercepted and forwarded to a security authority, an authorized user, or other recipients to aid in identifying the unauthorized user and the location of the mobile device. In this manner, the present invention will route calls that were directed to the authorized user's lost or stolen device to an alternate number designated by the authorized user; the authorized user will then be able to receive calls that would have otherwise been missed. In the case where the mobile device comprises a mobile telephone, telephone numbers dialed by the unauthorized user can be logged and transmitted to the security authority and/or authorized user, and authorized user and/or security authority can be alerted as the mobile device is engaging in a telephone call. A third party (such as a security authority) may request to access the telephone call, and then establish a conference connection to the telephone call. The third party may actively participate in the conversation or listen to the conversation surreptitiously.

When a current user of the mobile device enters a phone number in the mobile device and places a call, further steps may include intercepting the call and routing the call to an interactive voice response system. In one case, a pre-recorded message may be annunciated to at least the current user of the mobile device that the call is being recorded, followed by recording at least part of a conversation being conducted by the current user of the mobile device. In another embodiment, once the current user of the mobile device has entered a phone number to place a call, the mitigation process may include intercepting the call and routing the call to a predetermined phone number.

Text messages may also be intercepted. In one embodiment, altering the function of the mobile device includes intercepting a text message submitted by a current user of the mobile device; and routing a copy of the text message to at least one of a security authority and the authorized user.

The data stored on a mobile device may be protected (650) in any desired manner, such as by encryption. Any portion of the stored data may be encrypted, such as files or other data elements designated (e.g., by a list, flag on the file, location of the file, or other method) to be encrypted upon the occurrence of a security compromise event. Alternatively, files and data elements may be encrypted as they are created so that they cannot be viewed by an unauthorized user even before a security compromise event has been determined. An authorized user may designate individual files to be encrypted, as well as types of files to encrypt. In addition to, or as an alternative to, encryption, files may be hidden from the file system of the mobile device to prevent their access by an unauthorized user. Authorized users can gain access to such files through, for example, a software application independent of the operating system of the mobile device that verifies the user is authorized to access the files.

Designated files can be encrypted independent of the mobile device's operating system, such as through an independent software application that encrypts/decrypts files and allows a user to access them. The operating system is thus blocked from accessing such files, preventing an unauthorized user from exploiting security flaws in the operating system to view protected files. Operating system calls to open such files can be intercepted and the files opened and decrypted if the current user is authorized to access the files. Similarly, operating system calls to close such files can be intercepted and the files closed and decrypted by the independent software application. Files stored on the mobile device may be encrypted and decrypted in any desired manner, such as with a password known by a security authority and/or the authorized user.

In one embodiment of the present invention for example, to increase the level of protection for data stored on the mobile device, a password on the mobile device can be modified to utilize a password that is more secure, for example, by using a longer and/or more complex password code, or setting a password where the mobile device was not protected by a password. Normally, these more secure or enhanced-strength passwords are considered less user friendly and are often not used as primary passwords by the authorized users. Therefore, embodiments of the present invention may adaptively modify the strength of passwords on mobile devices depending on the security state and context of a mobile device.

Some or all of the data stored on the mobile device may be erased in response to a security compromise event to protect it from unauthorized access. Any desired files of other data elements can be erased. For example, an authorized user may specify a list of data elements to be deleted upon occurrence of the security compromise event. Additionally, deleted data elements may be overwritten with other data to prevent forensic recovery of the data. Deleted data may be overwritten any desired number of times, and with any desired data (such as random data, alternating data values, predetermined data patterns, and a combination thereof).

Some or all of the data stored on the mobile device may further be archived to allow an authorized user to recover the data, even if the mobile device is not recovered. As with files marked for encryption and/or deletion, an authorized user may specify particular files or other data to be archived in any desired manner. The authorized user may also specify one or more destinations to which the archived data should be transmitted to in the event of a security compromise event, such as a security authority, host server, or an alternate device accessible by the authorized user (e.g., another mobile device of the same type or a central data server). The archived data may be transmitted from the mobile device to a specified destination in conjunction with the encryption or deletion of the data upon a successful transfer. An authorized user may then retrieve the archived data to a replacement mobile device, or may instruct that the archived data be delivered to any other desired destination. For example, the authorized user may specify a destination address (such as an email address or physical mailing address) to which an electronic copy or physical copy (e.g., the archived data stored on a portable storage medium) can be delivered. Any type of data stored on the mobile device may be archived, such as documents, email or telephone contact information, software applications, media files, and/or pictures. Additionally, licensing information pertaining to one or more data elements may be archived.

Data may be archived at any time, including, upon occurrence of a security compromise event, according to a predetermined schedule, and or at a time specified by an authorized user, security authority, or other authorized entity.

Systems and methods of the present invention may store sensitive data in a specified location for special processing upon the occurrence of a security compromise event. The specified location may be a physical location in a memory, as well as a location designated through the file system of the mobile device. For example, an authorized user may store sensitive data elements in a special folder on the file system of the mobile device. When a security compromise event occurs, one or more functions can be executed on the data elements within the folder, such as encrypting one or more of the sensitive data elements with a password known to the authorized user and/or a security authority, deleting one or more of the sensitive data elements, multiply overwriting one or more of the sensitive data elements, and/or transmitting one or more of the sensitive data elements to an address specified by the authorized user. The special designation of files allows, among other things, important data to be quickly protected, archived, and/or destroyed before handling less sensitive data in the event of a security compromise event.

The functionality of the mobile device may be altered to aid in tracking the device (660) following the occurrence of a security compromise event. For example, the mobile device may determine a network address (including a wireless network address) assigned to the mobile device, as well as wireless access point identifiers from signals received by the mobile device. The mobile device can store and transmit the address(es) and identifier(s) to a security authority. The security authority may then determine, based on the network addresses and wireless access point identifiers, a location of the mobile device.

Similarly, the mobile device may receive a signal from a GPS or other source providing geolocation information. The geolocation information from the signal can be stored and transmitted to a security authority. A security authority or authorized user receiving location information from the mobile device can present the location on a map overlay to track the current position of the mobile device, as well as the date and time of any changes in the mobile device's position. The map of the mobile device's position can be provided through a web site over the Internet to allow police officers or other security authority members to locate the mobile device.

The functionality of a mobile device may be altered to gather information on how the mobile device is being used by an unauthorized user and provide that information to an authorized user or security authority to aid in locating the device and/or unauthorized user (670). For example, phone numbers and email addresses to which messages are sent after occurrence of the security compromise event may be stored by the mobile device and transmitted to a security authority. Data-capturing equipment onboard a mobile device (such as a digital camera or microphone) can also be used to gather information on the user of the mobile device, mobile device's present environment. A camera in communication with the mobile device, for example, can be activated to capture a still image or video clip, which can be stored in the mobile device and transmitted to a security authority. Similarly, a microphone may be used to capture audio clips. Data-capturing equipment such as the camera and microphone can be used to take continuous samples of data to help locate the device, inhibit use of the data capture device by the unauthorized user, and/or to wear down the battery of the mobile device to diminish it's usefulness to the unauthorized user. Alternately, the data capture device may be disabled to preserve battery life and/or to prevent its use by the unauthorized user.

The microphone or camera may be activated upon any desired condition being satisfied, such as: the mobile device receiving a call from a predetermined phone number; when the mobile device receives a call during which a predetermined pattern of DTMF tones is received by the mobile device; or during a call received by the mobile device, an utterance received by the mobile device matches within a predetermined threshold a security enablement utterance stored within the mobile device. In other embodiments, the microphone or camera is activated upon the mobile device receiving a text message from a predetermined source, or when a received text message contains a predetermined text string such as a code indicating that the device should assume a security lockdown status. Audio or video samples obtained by the microphone and/or video camera may be stored on the mobile device for later retrieval and/or further relayed to the authorized user and/or a security authority.

In order to help capture an image of the face of an unauthorized user, the mobile device may prompt the user to undertake an activity that involves looking at the mobile device, such as prompting the user to enter a password, playing an audio sequence on the mobile device, strobing a light source on the mobile device, announcing that the current user has won a prize and instructing him/her to watch for prize redemption details, and/or displaying a video sequence. While the current user's attention is focused on the mobile device, the camera may be used to capture an image of his/her face for transmittal to a security authority. Similarly, a camera or microphone in communication with the mobile device can be activated in conjunction with initiating a surreptitious communication session with a security authority. Still images, video, and audio data captured by the mobile device can then be transmitted to the security authority. The security authority can use images/video of the unauthorized user to identify him/her (e.g., through comparing the images/video to police booking photos), and can also use the images/video to identify the surroundings of the mobile device. Multiple sensors of the device can be used. For example, both front and back cameras can be used, as can any infrared sensors on the device. The unauthorized user may also be identified from samples of the unauthorized user's voice (taken from captured audio clips). Other sensors can also be used. For example, if the device is able to capture fingerprint information of the user, for example, through a touch sensitive screen, this information can be captured and provided appropriately.

As discussed previously, messages sent to and from the mobile device may be intercepted and/or rerouted to a security authority to prevent unauthorized use of the device and to help identify an unauthorized user and/or the location of the mobile device. In addition, the mobile device may be configured to maintain a record of each key depressed on the mobile device, and transmit that log to an authorized user or security authority. The logging of keystrokes in this manner may further aid in identifying the unauthorized user by capturing usernames, passwords, contact entries, and other information entered by the unauthorized user.

In addition to passively receiving data from the mobile device, an authorized user or security authority may actively access or command the mobile device in accordance with the present invention. A security authority or authorized user may transmit commands to the mobile device to execute various functions, as well as to provide software updates, applets, sections of executable code, interpretable scripts, or data elements to be processed by the mobile device. The mobile device may thus be provided with software to perform various tasks upon the occurrence of a security compromise event, as well as at any other desired time.

In one exemplary embodiment of the present invention, a security authority and/or the authorized user may log into a remote access service configured to communicate with the mobile device and activate an application programming interface in the mobile device to forward to the remote access service the current status of the mobile device, the current location of the mobile device, an image taken by a camera in communication with the mobile device, a real-time video captured by a camera in communication with the mobile device, a list of keys pressed on the mobile device, and/or a list of services currently running on the mobile device. Additionally, an authorized user or security authority may issue a command to the mobile device to initiate a chat session and provide an interface on the mobile device for enabling a text-based interaction with the current user.

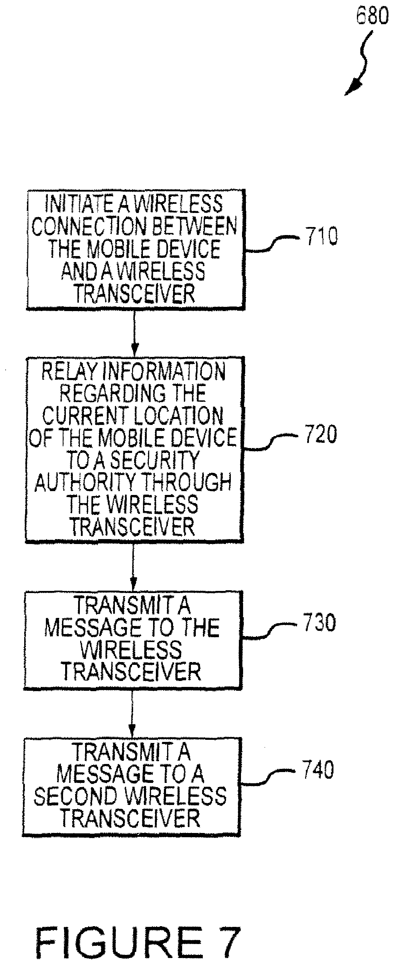

The functionality of the mobile device may be altered to communicate with other devices to assist in locating and recovering the mobile device (680). For example, referring now to Figure 7, communication with other devices (680) may include initiating a wireless connection between the mobile device and a wireless transceiver (710), relaying information regarding the current location of the mobile device to a security authority through the wireless transceiver (720), transmitting a message to the wireless transceiver (730), and transmitting a message to a second wireless transceiver (740).

A mobile device can initiate a connection between any device, system, or person through a wireless transceiver, and may connect to the wireless transceiver using any desired communication protocol. The mobile device may connect to any number of wireless transceivers. Once connected to a wireless transceiver, the mobile device may relay any desired information regarding the current location of the mobile device to a security authority, as well as files and data stored on the mobile device. For example, a mobile device that initiates a connection with a wireless access point (WAP) connected to the Internet may send an email to a security authority that includes text and attachments to aid the security authority in locating the device and apprehending an unauthorized possessor of the device. Similarly, a mobile device initiating a connection with a cellular telephone network may dial the security authority and provide information regarding the location of the mobile device through an audio message and/or DTMF tones.

The mobile device can provide any other desired information to (or through) a wireless transceiver it initiates contact with. For example, in one embodiment of the present invention the mobile device can transmit a message to a wireless transceiver indicating that a lost or stolen device is present within a signal range accessible by the wireless transceiver. Similarly, a mobile device may determine the signal strength of its wireless connection with the wireless transceiver, and obtain identifying indicia (such as a device name, IP address, or other identifier) for the wireless transceiver and transmit a message to a different wireless transceiver including the identification and signal strength information. The signal strength and identification information for multiple wireless transceivers can then be used to triangulate the location of the mobile device. Additionally, where the wireless transceiver (or device in communication thereto) is capable of determining its own physical location, the mobile device may request that the wireless transceiver provide its physical location, which in turn can be provided to a security authority.

The mobile device may transmit any other desired information to any number of wireless transceivers. In one embodiment of the present invention, for example, a message to a wireless transceiver may include a request for a response that includes the physical location of a wireless transceiver in communication with the mobile device, a request that a person in communication with the wireless transceiver report that a lost or stolen device is within its communication range, a phone number for the authorized user, a phone number for a security authority, and/or a request to place a call to a security authority.

### EXEMPLARY SYSTEM

An exemplary system for use in conjunction with the present invention is depicted in Figure 8. This system may be used in conjunction with the methods described in Figure 1 -7, as well as with any subset or combination of the elements thereof. The system shown in Figure 8 may also be used in conjunction with any other suitable embodiments of the present invention.

The exemplary system depicted in Figure 8 comprises a mobile device 800 that includes a processor 810 coupled to a memory 820 which may include volatile memory, nonvolatile memory or a combination thereof. A communications module 830 comprises a wireless transceiver 840 for wirelessly communicating with one or more servers 860 and other entities through antenna 850. The mobile device also includes a user interface 870 coupled to the processor 810. The mobile device 800 may include any suitable power source, such as a battery (not shown). The mobile device 800 may include any other desired components, such as a global positioning system (GPS) to provide geolocation information for locating the mobile device. Some or all of the components of the mobile device 800 may include (or be in communication with) a hardware identification module (not shown) such as a universal subscriber identity module and/or removable user identity module. The hardware identification module may be coupled to the processor 810 and may include an identifier that can be compared to a predetermined identifier to determine whether the hardware of the mobile device 800 has been altered and whether a security compromise event has occurred as a result. The hardware identification module (and predetermined identifier) may include any suitable identifier, such as an electronic serial number, a local area identity identifier, an integrated circuit identifier, an international mobile subscriber identifier, an authentication key identifier, and/or an operator-specific emergency number identifier. The identifier may be stored in the memory 820 and transmitted to the host server 860 for comparison to a predetermined identifier.

The functionality of the mobile device 800, including the methods depicted in Figures 1 -7 (in whole or in part), may be implemented through the processor 810 executing computer-readable instructions stored in the memory 820 of the mobile device 800. The memory 820 may store any computer-readable instructions and data, including software applications, applets, and embedded operating code. In one exemplary embodiment, a software application performing methods of the present invention includes a terminate and stay resident (TSR) application (or equivalent) configured to remain loaded in memory whenever the mobile device is in operation, which can help prevent the inadvertent or intentional deletion of the TSR. The software application may also be hidden (i.e., not viewable in an application list or task list) and/or protected from being stopped or deleted by a user or other software process. Aspects of embodiments of the present invention provide for tamper-resistant applications to prevent unauthorized users from disabling or otherwise removing the applications from operational status. In one exemplary embodiment, applications may be installed on mobile devices running the Symbian operating system, whereby applications that are running may not be unloaded or disabled.

Additionally, the software application may be configured to operate with minimal underlying hardware functionality. For example, the application may be initiated before the mobile device establishes a network connection. Such a situation may be provided, for instance, when the software application is installed on a SIM card in the mobile device, and the application launches before other software in the mobile device operating system. Alternately or in addition, a data element such as a link or a URL (universal resource locator) may reside on the SIM card, and by launching an application such as a browser with the URL or link, an application referenced by the link or URL may be loaded into the mobile device from a remote server and/or executed directly from on the remote server.

Software performing methods of the present invention may be provided with the device or downloaded onto the mobile device by an authorized user. The functionality of the mobile device 800 may also be implemented through various hardware components storing machine-readable instructions, such as application- specific integrated circuits (ASICs), field-programmable gate arrays (FPGAs) and/or complex programmable logic devices (CPLDs). Systems according to aspects of the present invention may operate in conjunction with any desired combination of software and/or hardware components.

The processor 810 retrieves and executes instructions stored in the memory 820 to control the operation of the mobile device 800. Any number and type of processor such as an integrated circuit microprocessor, microcontroller, and/or digital signal processor (DSP), can be used in conjunction with the present invention. The memory 820 stores instructions, data, messages transmitted from (or received by) the mobile device 800, and any other suitable information. A memory 820 operating in conjunction with the present invention may include any combination of different memory storage devices, such as hard drives, random access memory (RAM), read only memory (ROM), FLASH memory, or any other type of volatile and/or nonvolatile memory. Data can be stored in the memory 820 in any desired manner. In one embodiment of the present invention, for example, data stored within the memory 820 is partitioned into one or more logically disjoint groups. Each of the data groups are encrypted with a respective unique encryption key to prevent all the data on the mobile device from being accessed if a single encryption key is compromised. This also increases the time it will take a "brute force" attempt to try all possible encryption keys to succeed. The groups of data can be partitioned across a plurality of physical storage media, such a RAID array.

The communications interface 830 communicates with one or more servers 860 or other suitable entities. Any suitable communications device, component, system, and method may be used in conjunction with the present invention. For example, the wireless transceiver 840 may be configured to communicate using any number and type of cellular protocols, such as General Packet Radio Service (GPRS), Global System for Mobile Communications (GSM), Enhanced Data rates for GSM Evolution (EDGE), Personal Communication Service (PCS), Advanced Mobile Phone System (AMPS), Code Division Multiple Access (CDMA), Wideband CDMA (W-CDMA), Time Division-Synchronous CDMA (TD- SCDMA), Universal Mobile Telecommunications System (UMTS), and/or Time Division Multiple Access (TDMA). A mobile device operating in conjunction with the present invention may alternatively (or additionally) include wireless transceiver(s) (and related components) to communicate using any other method of wireless communication protocol, such as an ISO 14443 protocol, an ISO 18000-6 protocol, a Bluetooth protocol, a Zigbee protocol, a Wibree protocol, an IEEE 802.15 protocol, an IEEE 802.1 1 protocol, an IEEE 802.16 protocol, an ultra-wideband (UWB) protocol; an IrDA protocol, a NFC protocol (for example, ISO/IEC 14443 or ISO/IEC 18092) and combinations thereof. The antenna 850 may be configured to transmit and receive any wireless signal in any format, and may comprise a plurality of different antennas to transmit and receive using different wireless protocols.

The communications module 830 can communicate with the server 860 or another device using any other form of connection, such as a wired Internet connection, a wireless Internet connection, a cellular telephone network connection, a wireless LAN connection, a wireless WAN connection, an optical connection, a USB connection, a mobile device synchronization port connection, a power connection, and/or a security cable. The communications module 830 can be used to communicate with one or more companion devices to monitor the position or status of the mobile device 800 (e.g., by monitoring whether a communication link between the mobile device and companion device is intact), as well as with any number of other devices to help track/locate a lost or stolen mobile device 800.

The mobile device 800 includes a user interface 870. The user interface 870 may include any number of input devices (not shown) to receive commands, data, and other suitable input from a user, as well as any number of output devices (not shown) to provides the user with data, notifications, and other suitable information from the mobile device 800.

Any number of input devices may be included in the user interface 870 such as a touch pad, a touch screen, and/or an alphanumeric keypad to allow a user to enter instructions and data into the mobile device 800. The user interface 870 may be configured to detect pressure exerted by a user on the keys of a keypad, as well as the time interval between key presses in order to determine if the current user is authorized to use the device. The user interface may also include a microphone to allow the user to provide audio data to the mobile device 200, as well as a camera to allow the mobile device to capture still or video images. The mobile device 200 may include speech recognition software to process verbal input through the user interface 870. The user interface 870 may also include any number of suitable output devices, such as a display screen to visually display information (such as video and text), and/or a speaker to provide auditory output. The mobile device 800 may be configured to provide words, phrases, tones, recorded music, or any other type of auditory output to a user through the speaker. As discussed previously, the user interface 870 can be activated to provide information and/or hinder the operation of the mobile device 800 when an unauthorized user attempts to use the mobile device 800. For example, the illumination level of the display may be modulated to draw attention to the mobile device, and unpleasant and/or loud sounds can be played over the speaker.

The mobile device 200 may include one or more biometric devices configured to receive biometric information, such as a fingerprint scanner, an iris scanner, a retinal scanner, SpO2 (blood oxygen), heart rate beats per minute (BPM), a voiceprint analyzer, and/or a breath analyzer. Input devices such as a microphone or camera may also be utilized to perform biometric analyses, such as a voice analysis or facial recognition.

Information provided or received by the user interface 870 may be in any appropriate format. For example, a user interface that communicates information to a user in an auditory format may first provide a data header followed by a data value to identify the data to the user. The user interface 870 may provide information in any number of desired languages, regardless of whether the information is provided audibly or visually.

The user interface can also provide/receive information to a user in a machine-readable format. In one exemplary embodiment of the present invention, for example, the user interface 870 of a mobile device 800 may send and receive messages using dual-tone multi-frequency (DTMF) tones. The mobile device 800 can be configured to send, receive, and process machine-readable data can in any standard format (such as a MS Word document, Adobe PDF file, ASCII text file, JPEG, or other standard format) as well as any proprietary format. Machine- readable data to or from the user interface may also be encrypted to protect the data from unintended recipients and/or improper use. In an alternate embodiment, a user must enter a passcode to enable use of some or all of the functionality of the mobile device 800. Any other user interface feature may be utilized to allow a human or non-human user to interact with one or more devices operating in conjunction with the present invention.

The mobile device 800 may include any other suitable features, components, and/or systems. For example, the mobile device 800 may be configured to preserve the life of its battery by shutting off some or all of its components, such as a camera or microphone. Components can be selectively shut down in response to a security compromise event, as well as in response to a command from an authorized user or security authority. Alternately, the mobile device 800 can be configured to use its components excessively to drain the battery as quickly as possible, to, for example, limit the usefulness of the mobile device 800 to an unauthorized user.

The mobile device 800 may be configured to implement one or more security measures to protect data, restrict access, or provide any other desired security feature. For example, a mobile device 800 may encrypt transmitted data and/or data stored within the device itself. Such security measures may be implemented using hardware, software, or a combination thereof. Any method of data encryption or protection may be utilized in conjunction with the present invention, such as public/private keyed encryption systems, data scrambling methods, hardware and software firewalls, tamper-resistant or tamper-responsive memory storage devices or any other method or technique for protecting data. Similarly, passwords, biometrics, access cards or other hardware, or any other system, device, and/or method may be employed to restrict access to any device operating in conjunction with the present invention.

The host server 860 communicates with mobile devices 200, authorized users, unauthorized users, security authorities, and other entities to monitor and protect the mobile devices 200 from unauthorized use and to mitigate the harm associated with a security compromise event. The host server 860 may comprise any number of separate computer systems, processors, and memory storage devices, as well as human operators (e.g., to answer calls from authorized users reporting the loss/theft of a mobile device) and any other suitable entity. The host server 860 may include, or be in communication with, one or more databases 880 storing information regarding authorized users and mobile devices 200 in order to monitor and track the mobile devices 200 and provide instructions to the mobile devices 200 in the event a security compromise event occurs.

For example, a database 880 may store a usage profile for a mobile device to allow software on the host server 860 to detect whether continued usage of the mobile device deviates from the usage profile by a predetermined threshold. The host server 860 may also receive, process, and store (e.g., in the database 880) information from the mobile device 800. The host server 860 may handle any type of data in any format to achieve any purpose, such as receiving and processing environmental parameters captured by the mobile device to track the position and location of the mobile device 800 as discussed previously. The database 880 may also store location information that can be used to determine whether the mobile device 800 is operating in a valid location (e.g., "whitelisting" and "blacklisting" as discussed previously).

Databases 880 in communication with the host server 860 may also store archived data from mobile devices 800 for recovery in the event the mobile devices 800 are lost or stolen, or the data on the mobile devices 800 is destroyed (e.g., by a virus or other malicious program). The functionality of the host server 860 may be performed automatically or semi-automatically, such as through software/hardware operating on one or more computer systems, and/or by one or more human operators.

The host server 860 may include one or more system processors that retrieve and execute computer-readable instructions stored in a memory to control (at least partially) the operation of the host server 860. Any number and type of conventional computer, computer system, computer network, computer workstation, minicomputer, mainframe computer, or computer processor, such as an integrated circuit microprocessor or microcontroller, can be used in conjunction with the present invention. Computer systems can include the processor of a platform gaming system or smartphone. Computer systems used in accordance with aspects of the present invention may include an operating system (e.g., Windows NT, 95/98/2000/XP/Vista, Windows 7, Windows 8, OS2, UNIX, Linux, Solaris, MacOS, Android, etc.) as well as various conventional support software and drivers typically associated with computers. In certain embodiments, dedicated applications may be entirely or partially served or executed by the system processor to perform methods of the present invention.

The host server 860 may be accessed in any desired manner, such as through a website on the Internet, and/or through a telephone network. The host server 860 may include any number of human operators, computer systems, mobile telephones, mobile computing devices, interactive voice response (IVR) systems, and any other suitable system and device for communicating with a user, security authority, computing device, or other entity. For example, a suitable system for communicating can include the following: E91 1 emergency protocol used by location based services (LBS); layer 2 signaling initial call trace; call logs in the network home location register (HLR); forwarding calls; forwarding short message service (SMS) messages, and the like. These approaches may be used even when a phone is dead. Moreover, certain embodiments may thus mitigate impact on a user preventing people from listening in on calls to mitigate security risk. In one exemplary embodiment of the present invention, authorized users wishing to subscribe to a service providing monitoring and protection of their mobile devices can access a web site hosted by the host server 860 to create an account, pay for the service, identify one or more mobile devices to be protected, select options for the service, identify how the functionality of the device should be altered (e.g. features to implement or restrict) in the event the mobile device is lost or stolen, select an alternate caller identification indicia such as text to delivered in a caller ID data stream, report a security compromise event (such as the loss/theft of the device), and/or download software to operate on their mobile device to aid in monitoring and protecting the mobile device. Alternately, authorized users may interface with an automated IVR system and/or human operator over a telephone network. In the event a mobile device is lost or stolen, authorized users may interface with the host server 860 to report the security compromise event (i.e., the loss/theft of the device), track the status/location of the mobile device, recover data archived from the mobile device and stored by the host server 860, and/or to provide information on a security compromise event (such as reporting that the device has been located by the authorized user). Communications to and from the host server 860 may be protected (e.g., through encryption) as discussed above, or in any other manner.

The host server 860 can communicate with unauthorized users of a lost or stolen mobile device, both through the mobile device or through other communication methods. The host server 860 may notify the unauthorized user that the mobile device is lost or stolen, provide recovery information (such as a shipping address) to the unauthorized user, and facilitate the delivery of a reward to an unauthorized user who returns the mobile device. The host server 860 also communicates with the mobile device 800 to provide software updates, receive data for archival, identify files and other data to be protected, and to perform any other aspect of the present invention.

The host server 860 may be controlled by, or operate in conjunction with, an authorized user, telecommunications service provider, mobile device monitoring/tracking service provider, security authority, and/or any other desired entity. For example, authorized users and security authorities may communicate with or through the host server 860 to monitor a mobile device 800 and to recover the mobile device 800 if it is lost, stolen, or otherwise out of the control of the owner or supervisor, such as in the case of parental control monitoring, mobile banking, or the like. The host server 860 may be configured to provide notifications on how to return a lost/stolen mobile device 800, detect a security compromise event, and determine whether a mobile device's functionality should be altered and (if so) determine the manner in which the functionality of the mobile device 800 should be altered, as depicted in Figures 1 -7 and discussed previously. The host server 860 may operate in conjunction with any other desired systems, devices, human operators, or other entities.

### OPERATION

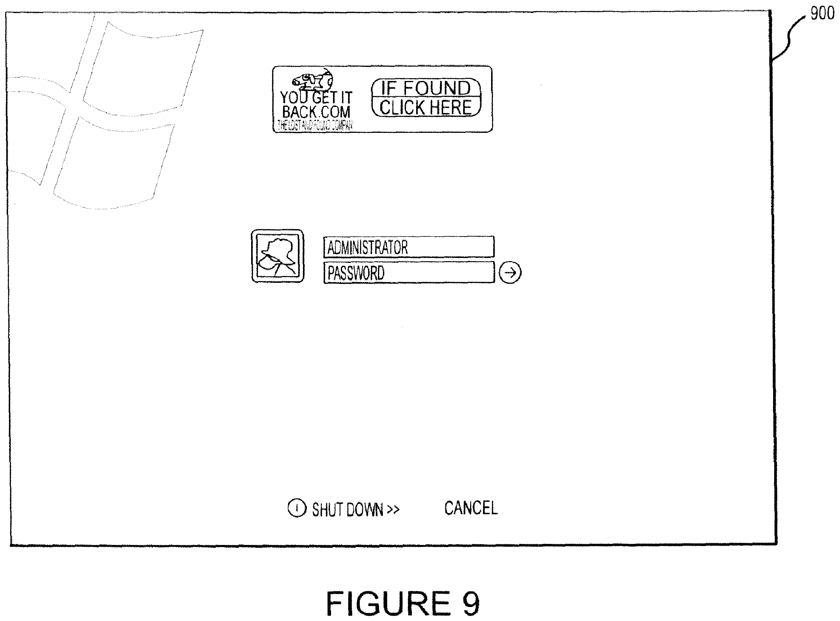

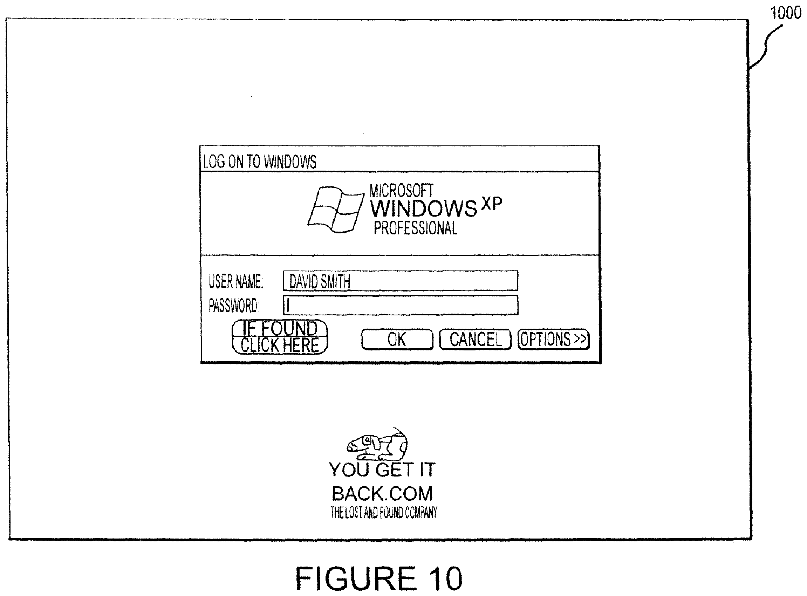

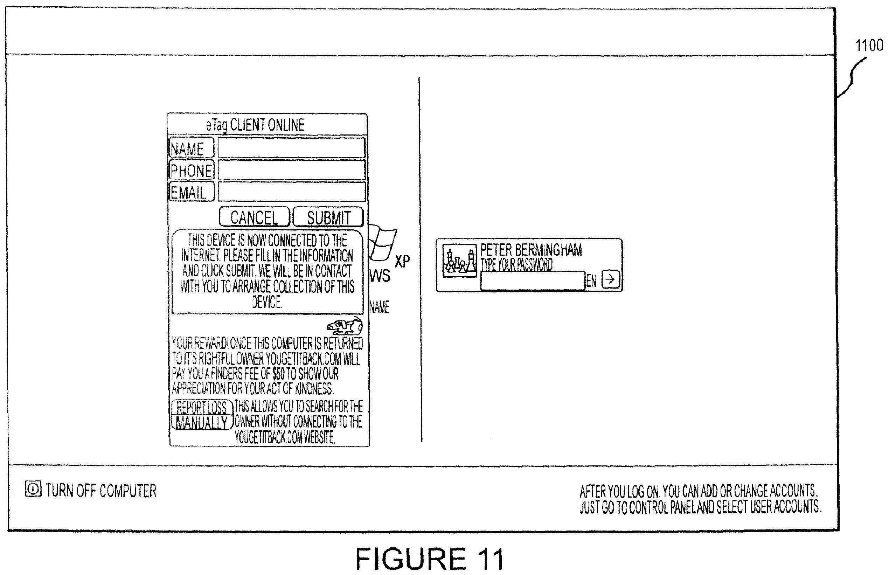

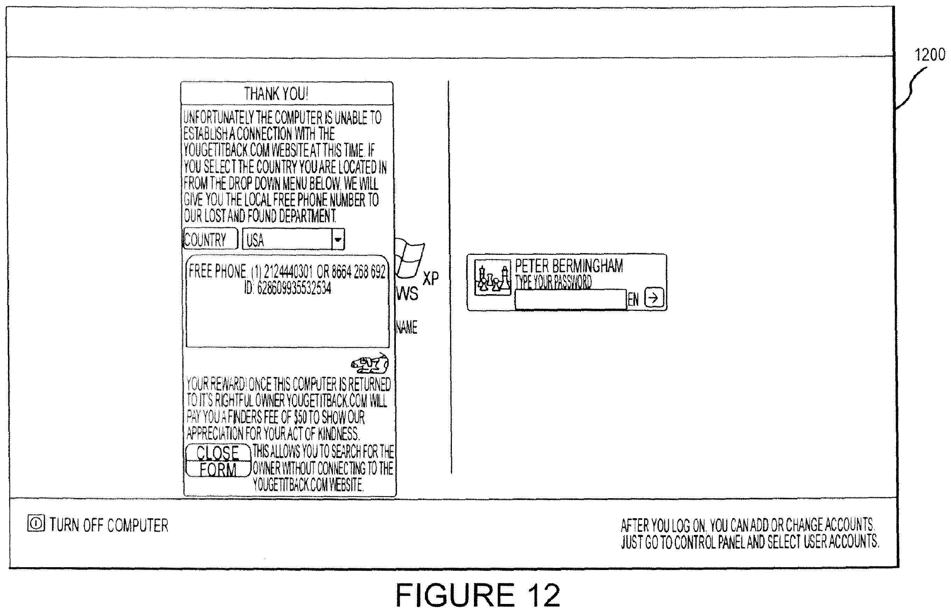

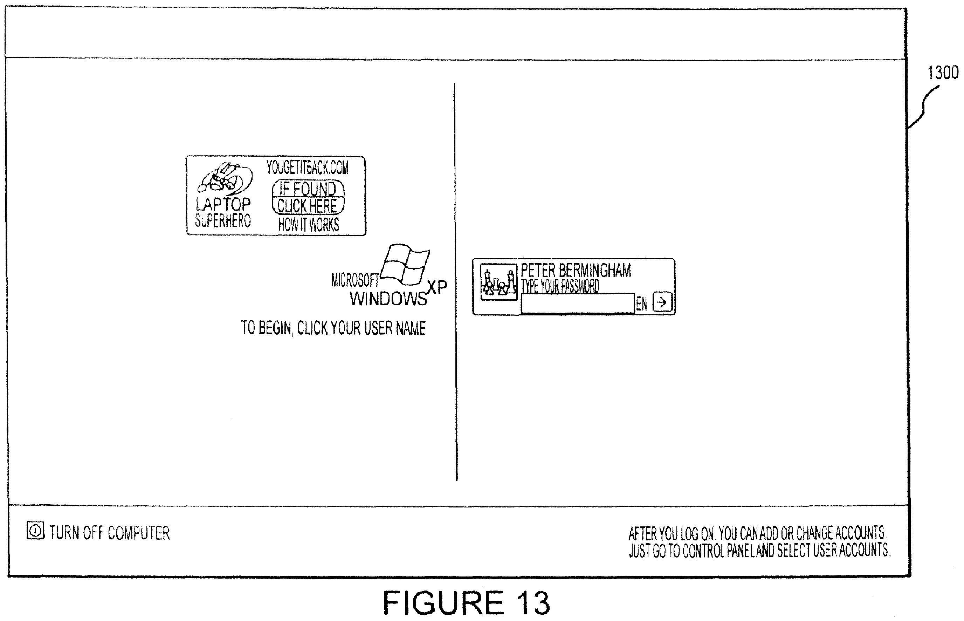

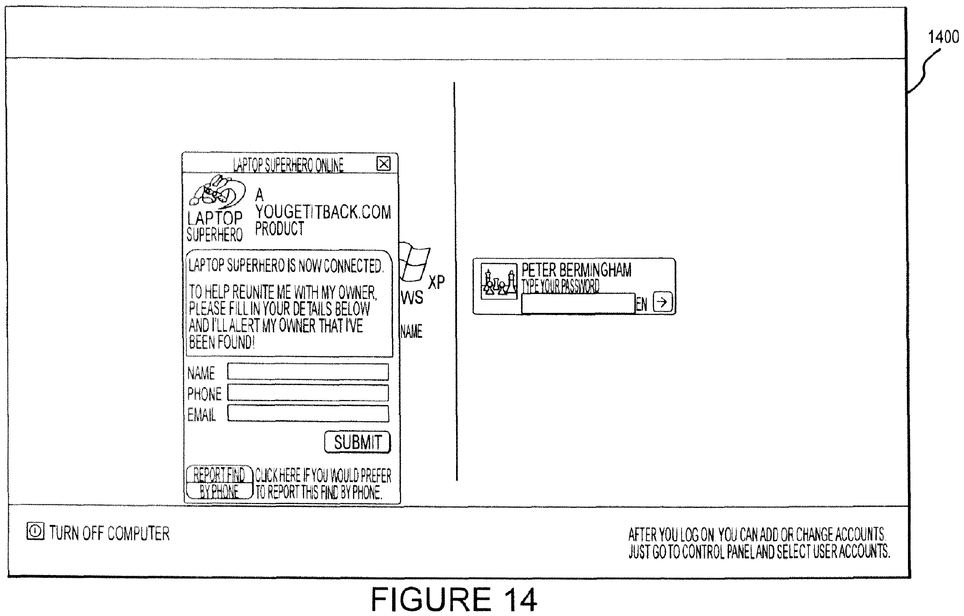

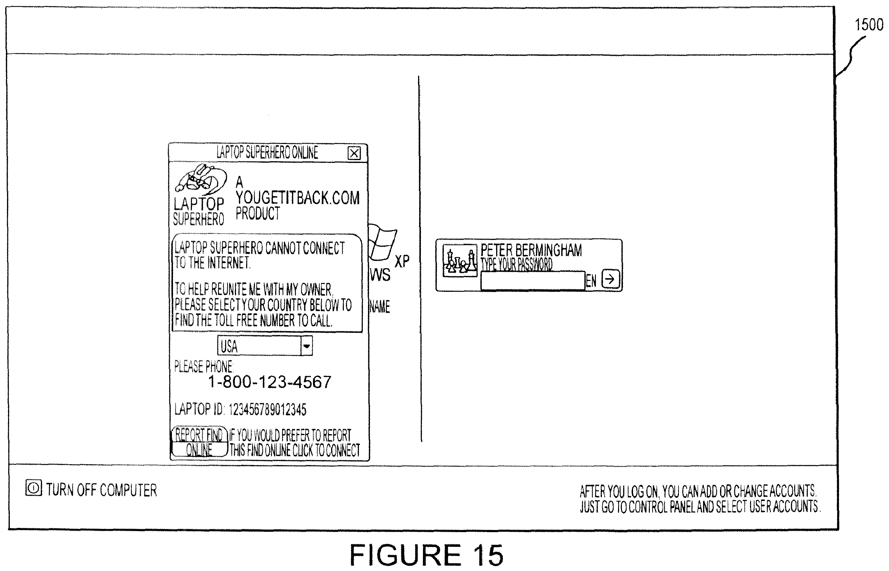

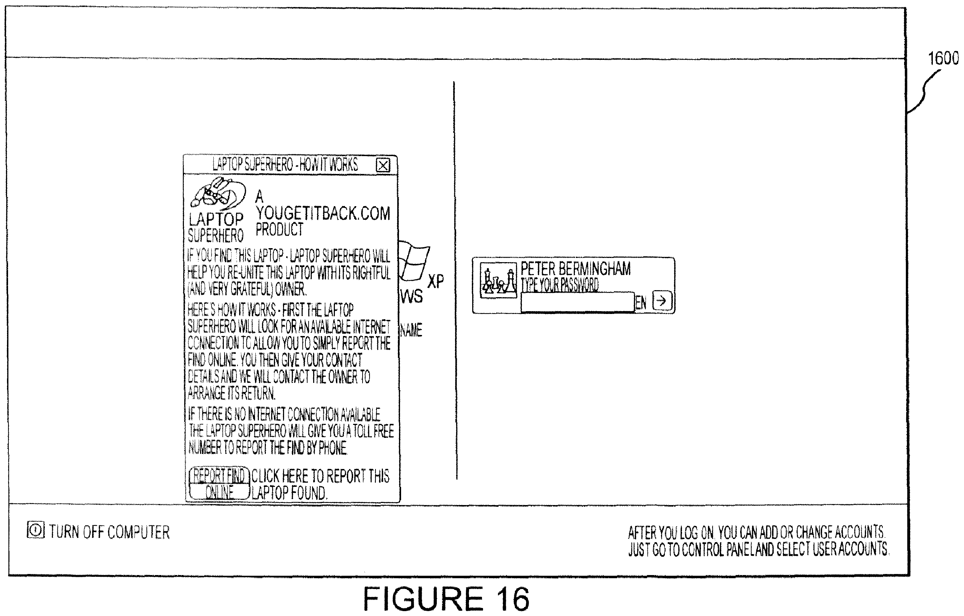

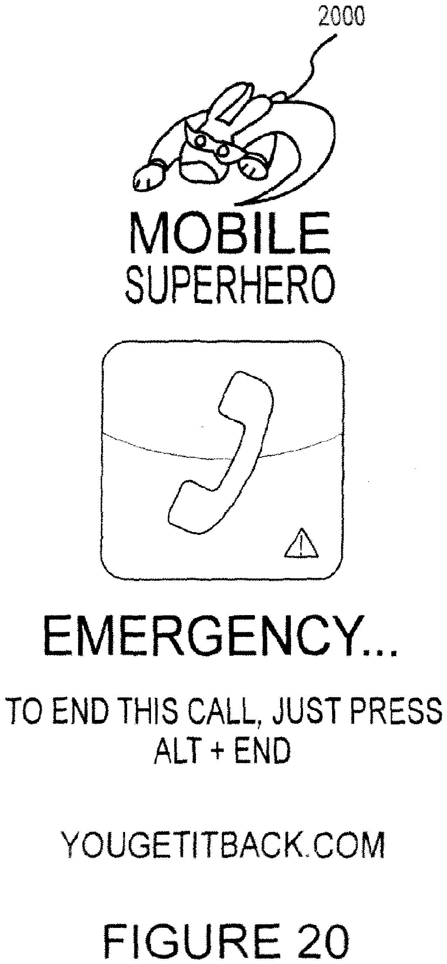

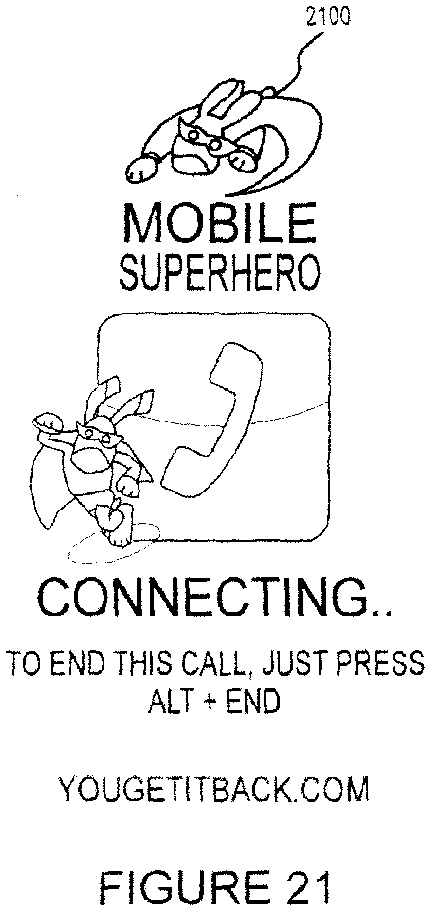

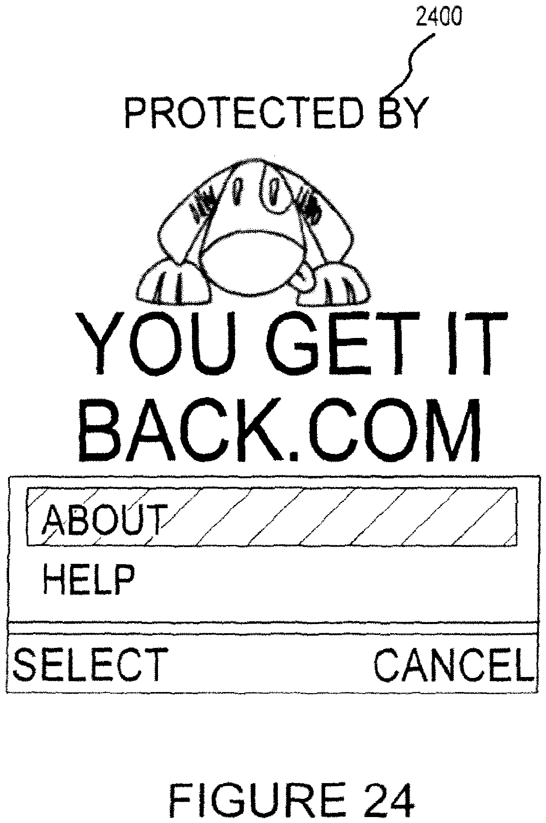

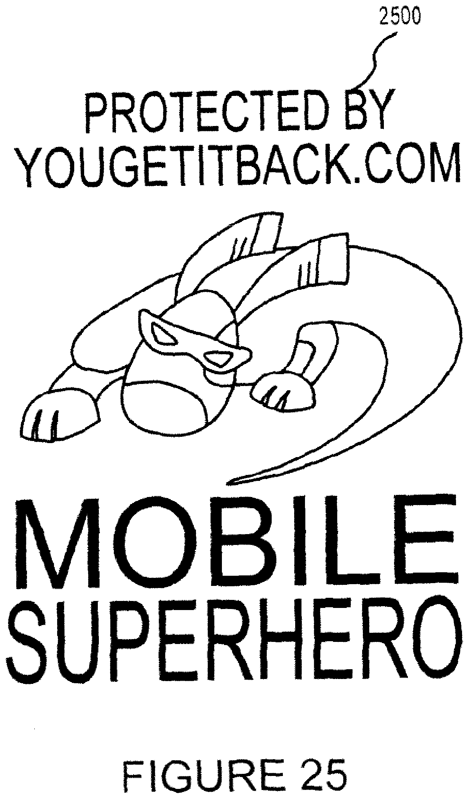

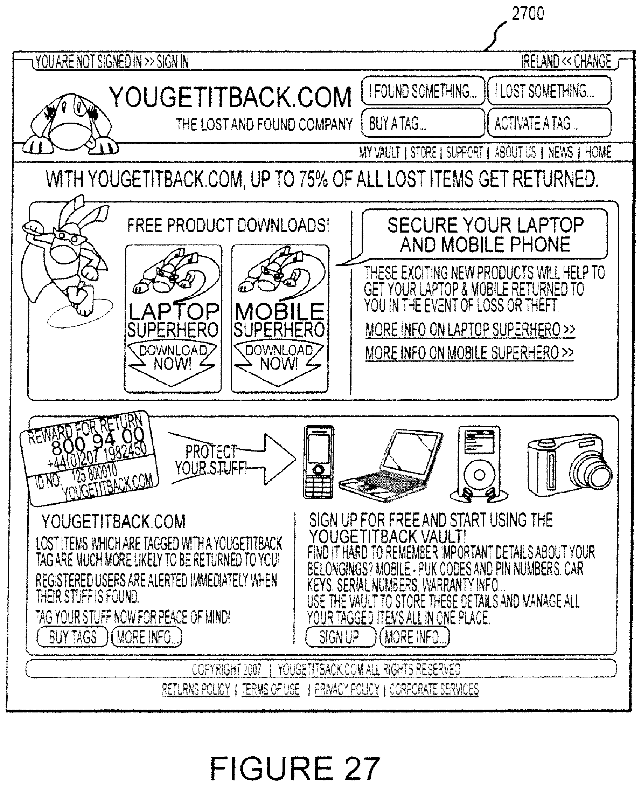

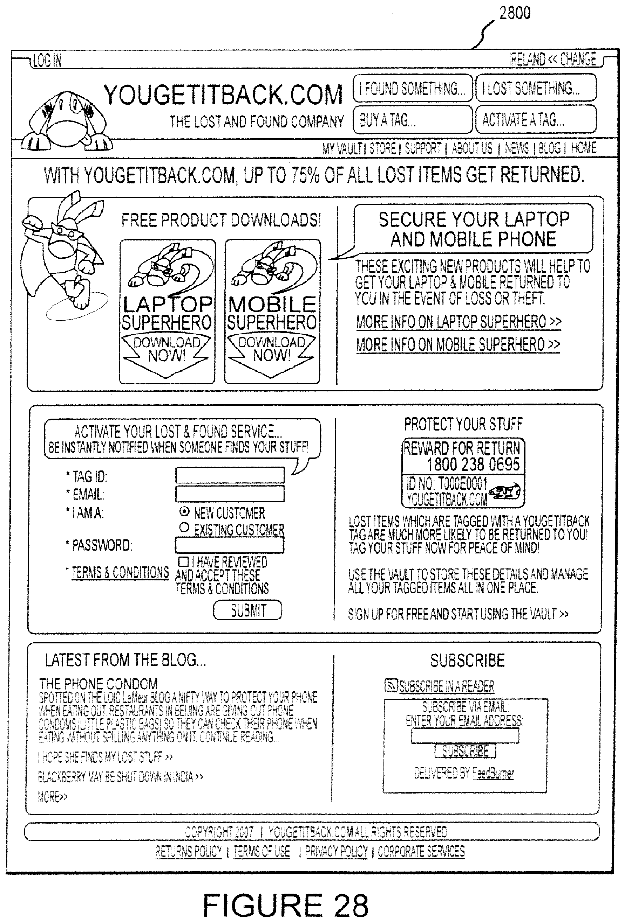

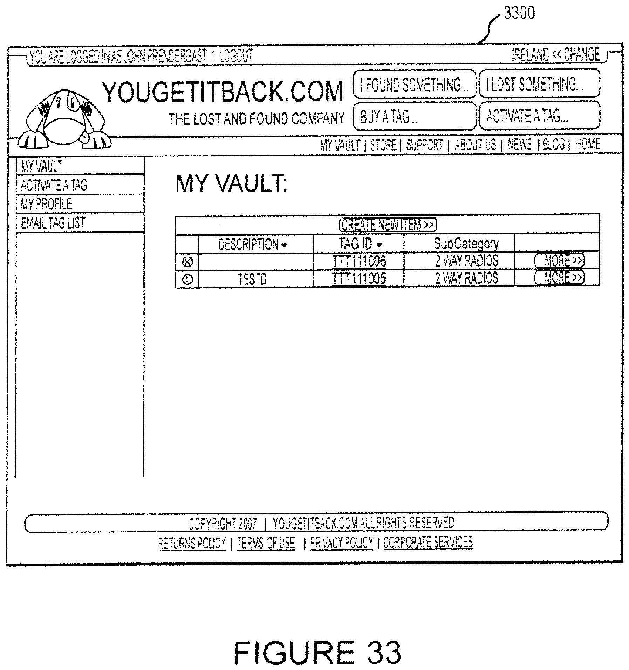

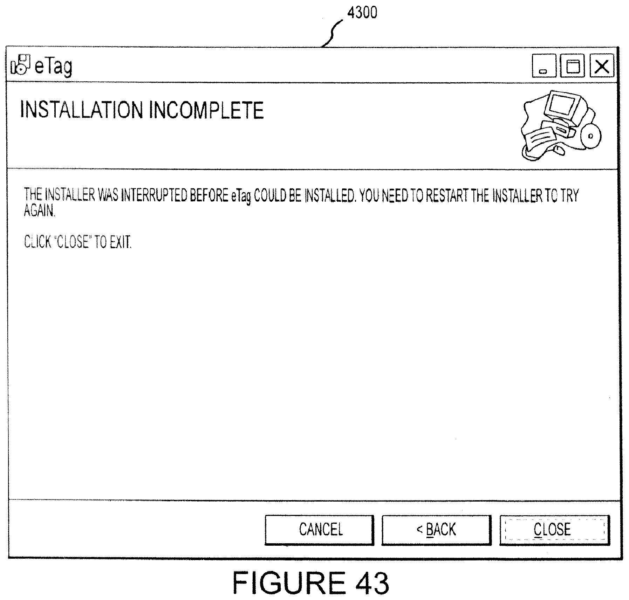

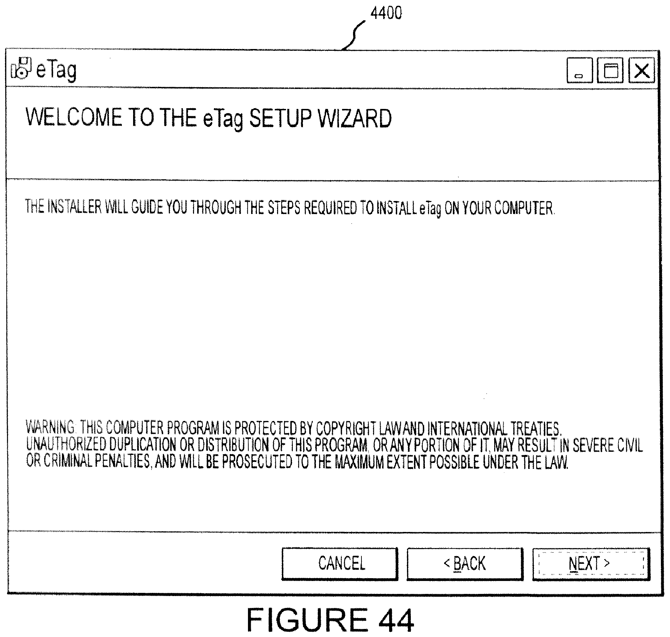

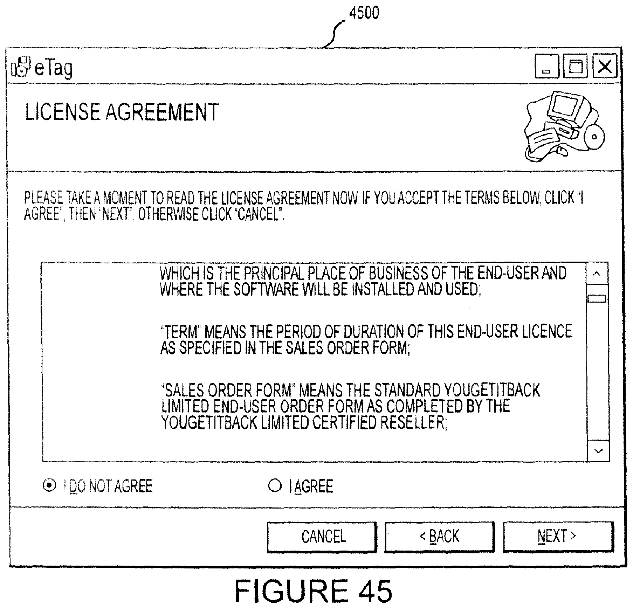

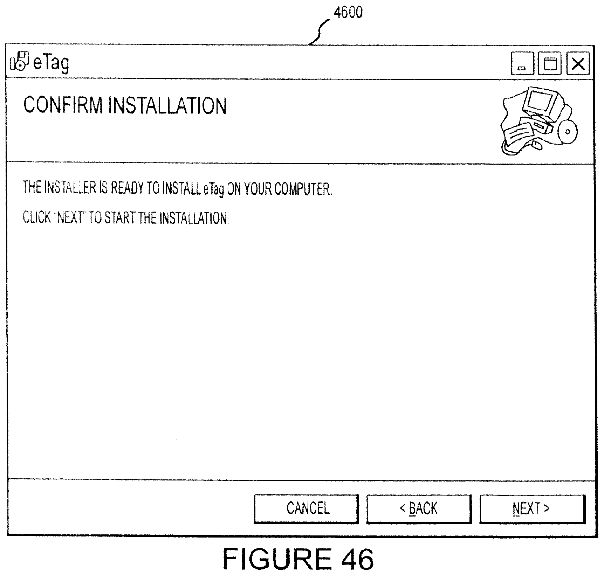

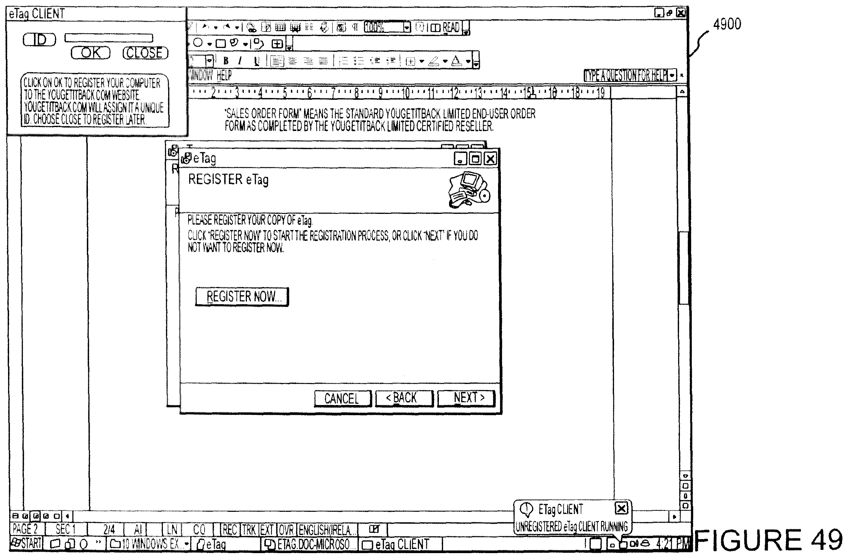

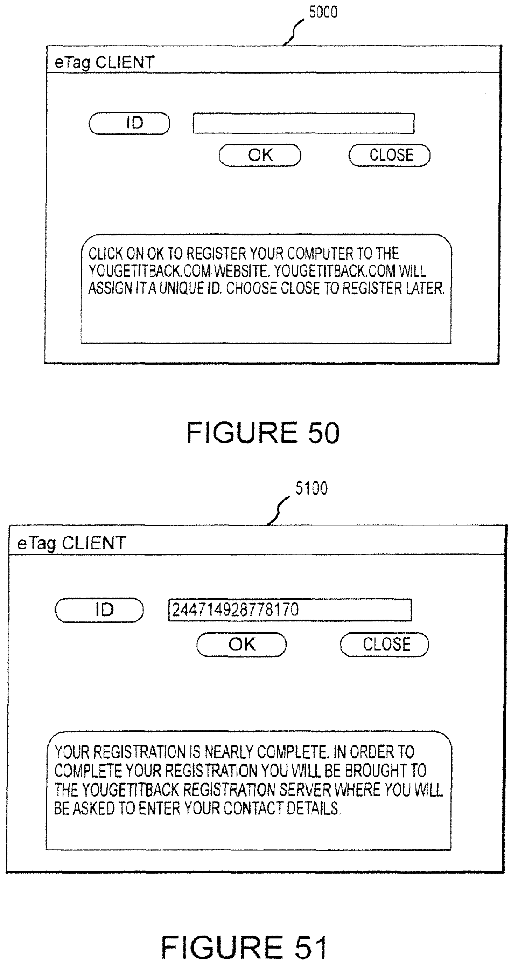

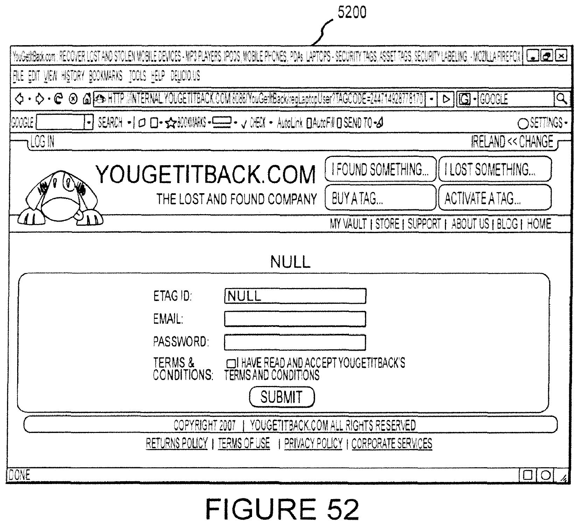

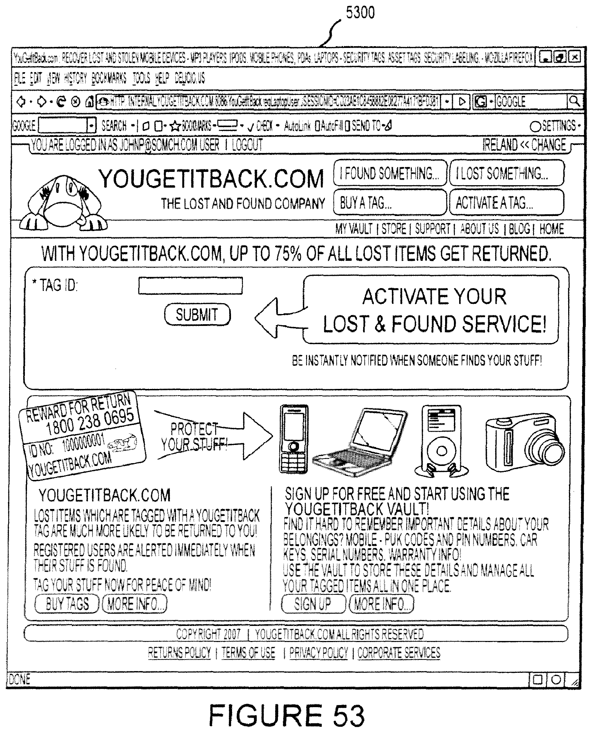

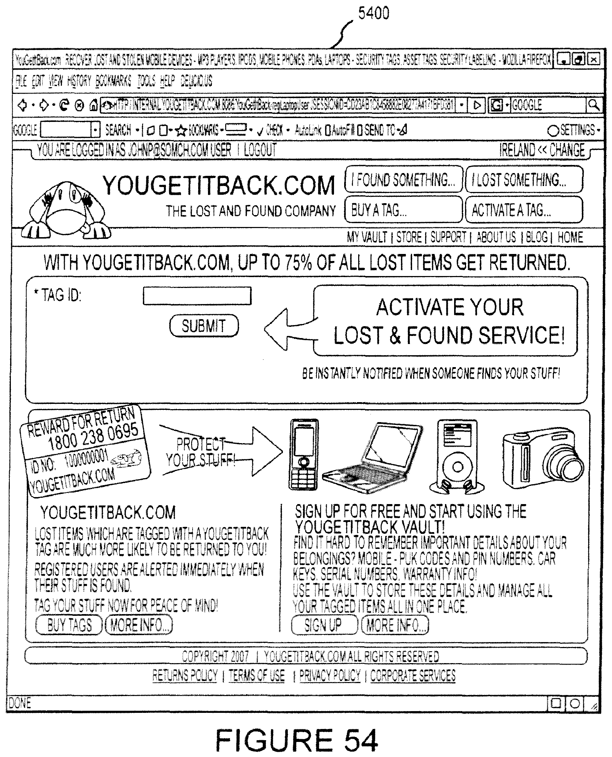

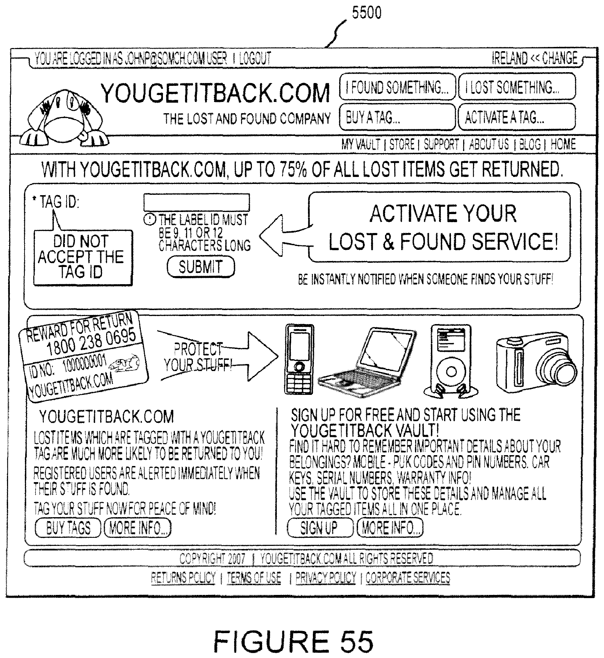

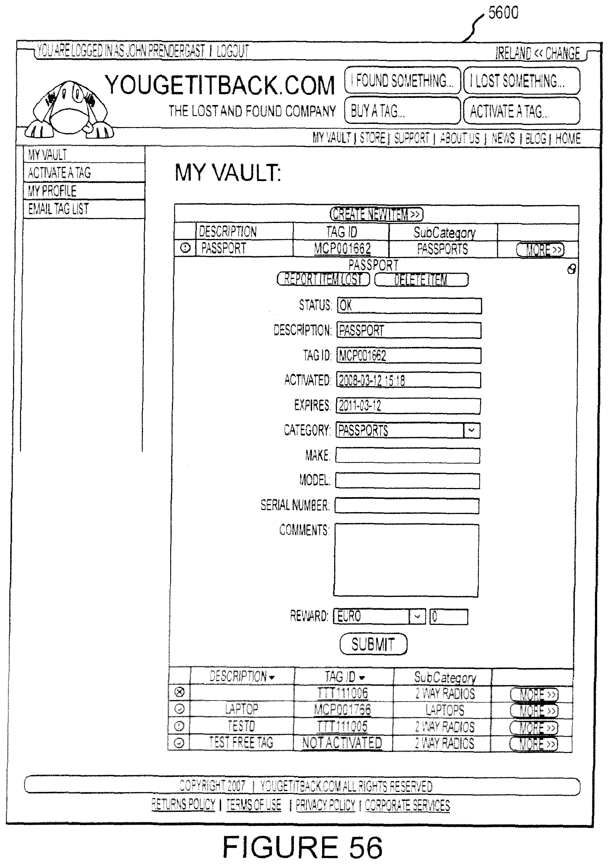

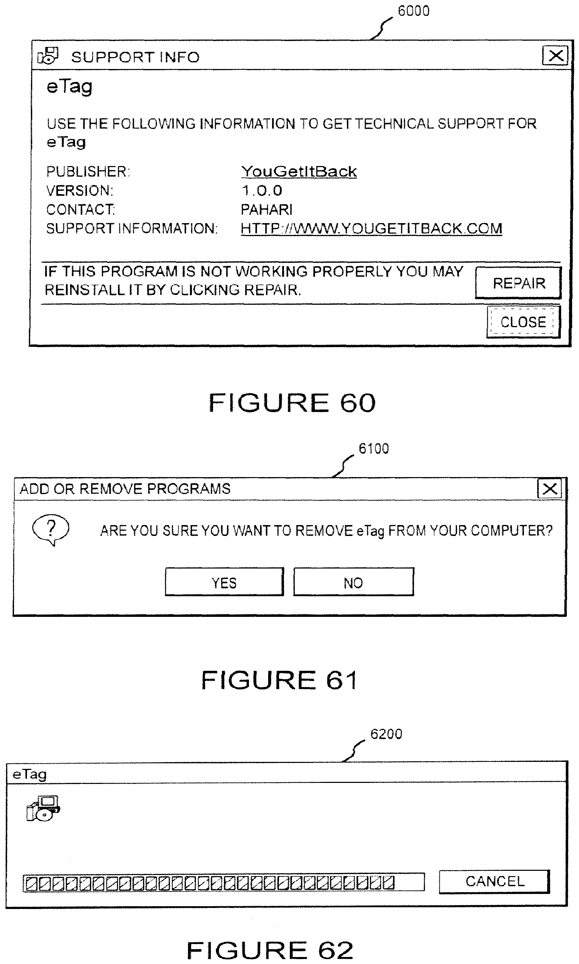

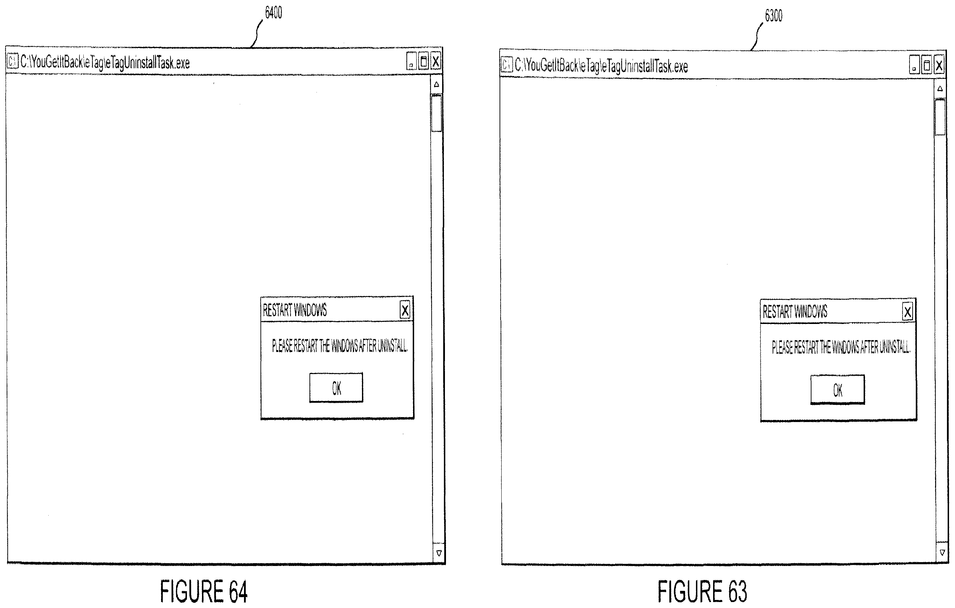

Figures 9-64 depict various aspects of the operation of exemplary embodiments according to the present invention. Figures 9-16 depict exemplary notification measures that can be provided on a mobile computing device such as a laptop computer in accordance with the present invention. As shown in the illustrated embodiments, a notification icon or graphic is provided in proximity to input fields where users normally log in to access the mobile computing device. The notification icon or graphic is accompanied by text providing information regarding returning of the device. The various notification messages allow a finder of the mobile device to see that the device is protected by an application operating in conjunction with the present invention as well as to provide information to allow the user to return the device. For example, referring now to Figure 13, screen 1300 provides a link to a website that an innocent finder can click on to return the device. Similarly, referring now to Figure 14, screen 1400 provides entry fields for a finder of the device to enter his or her name, phone number, and email address, and submit this information to a security authority. Screens 1500 and 1600 in Figures 15 and 16 respectively, provide a toll-free phone number and information regarding how to return the mobile device.

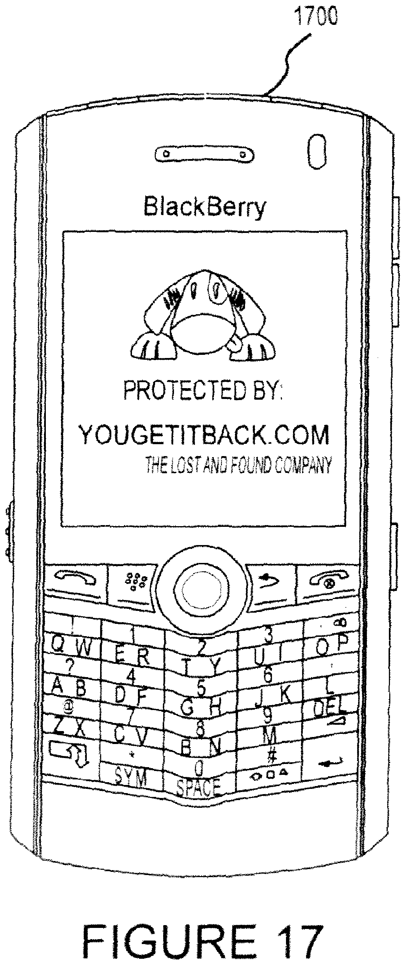

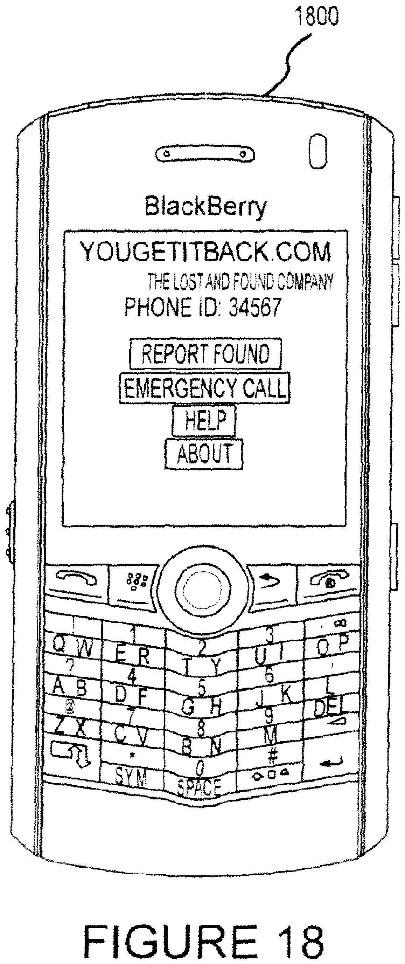

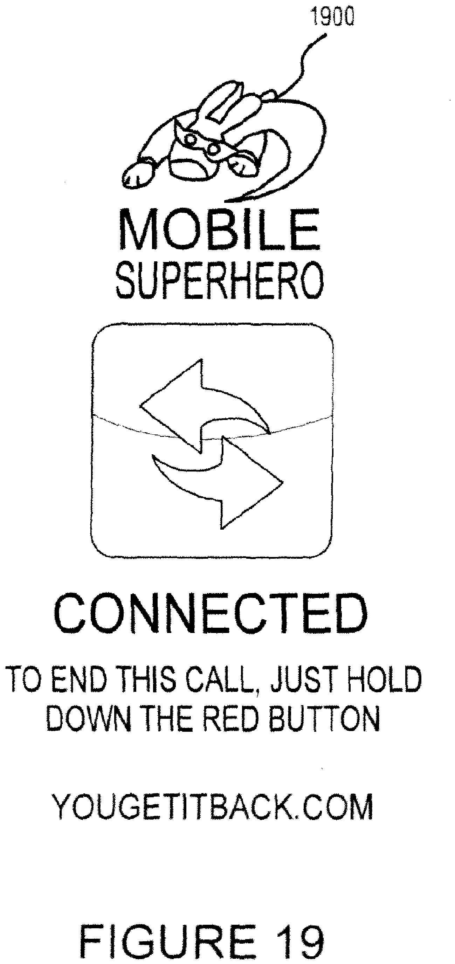

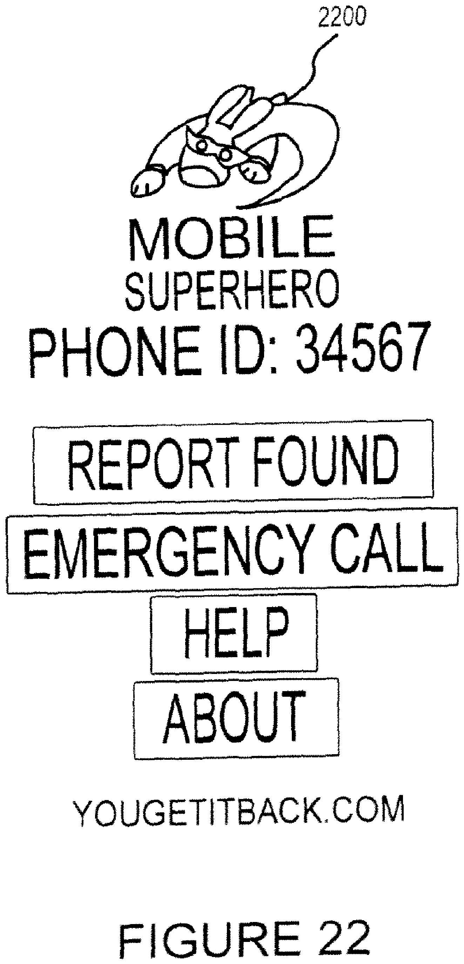

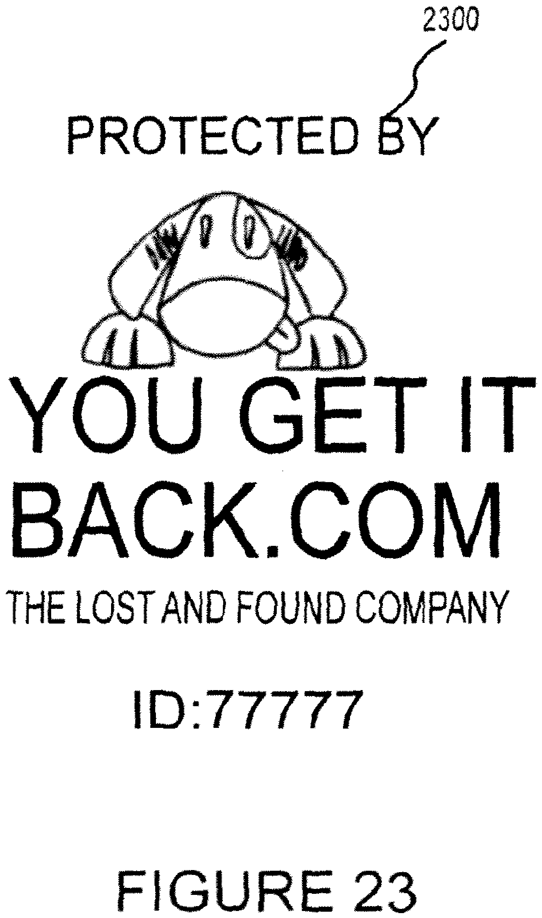

Figures 17-25 depict exemplary notification messages that may be displayed on a cellular phone, a PDA, or handheld mobile device. The notification messages alert the finder of the mobile device that the device is protected by an application operating in conjunction with the present invention as well as to provide information to allow the user to return the device. For example, referring now to Figures 18 and 22, the notification message may include buttons the user may select to return the mobile device. Figures 19, 20, and 21 depict notification messages that may be displayed when a user of a found mobile device places a call, such as to a security authority. Referring to Figure 23, the notification message may include an identification number associated with the mobile device as well as any other desired information.

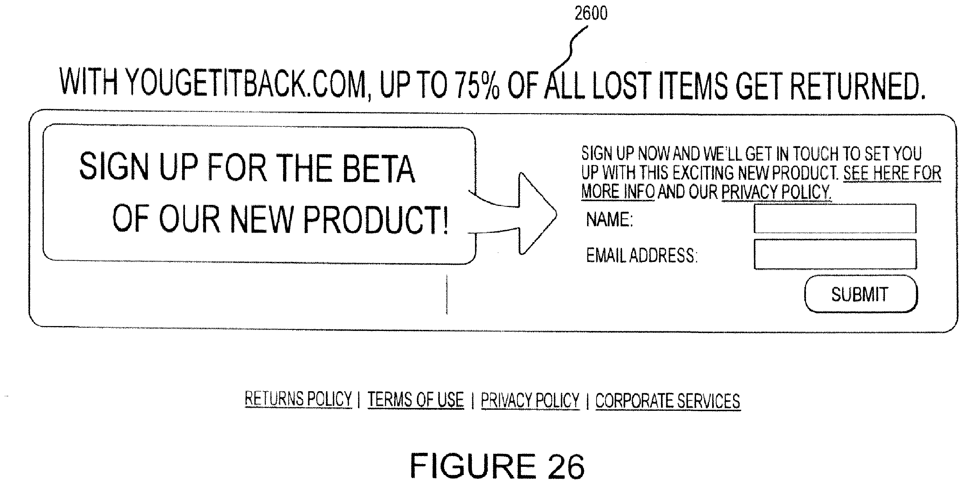

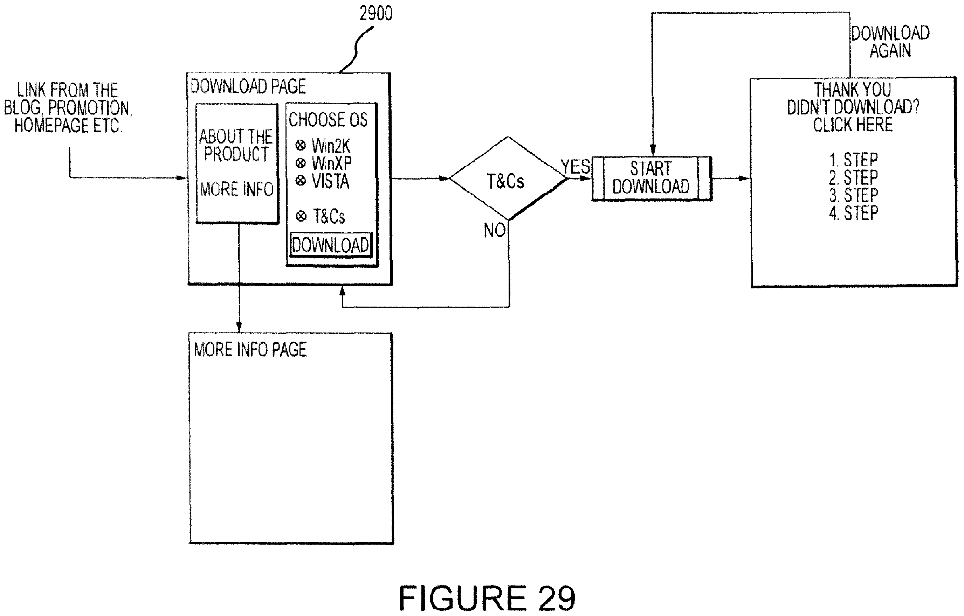

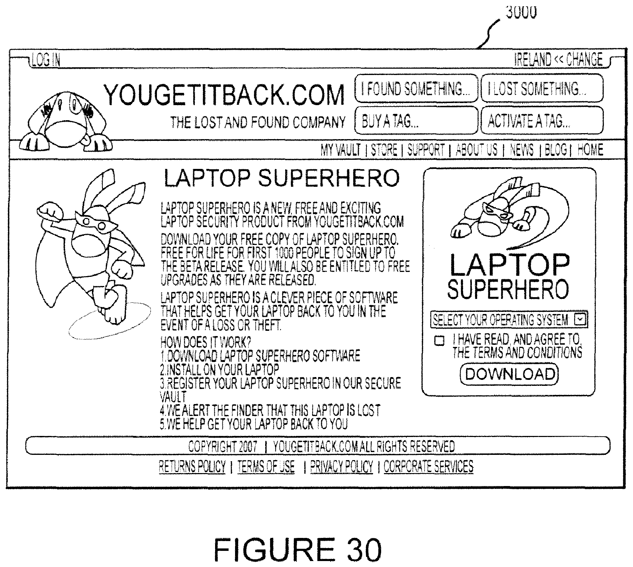

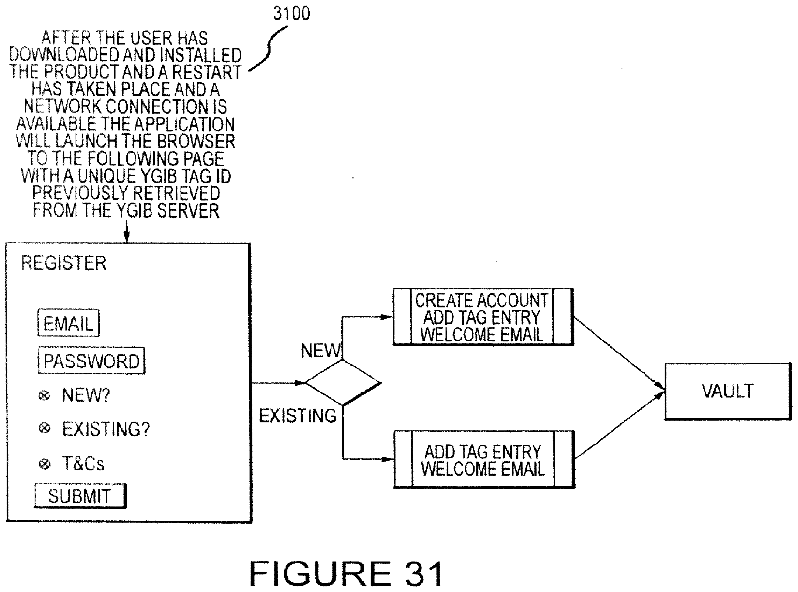

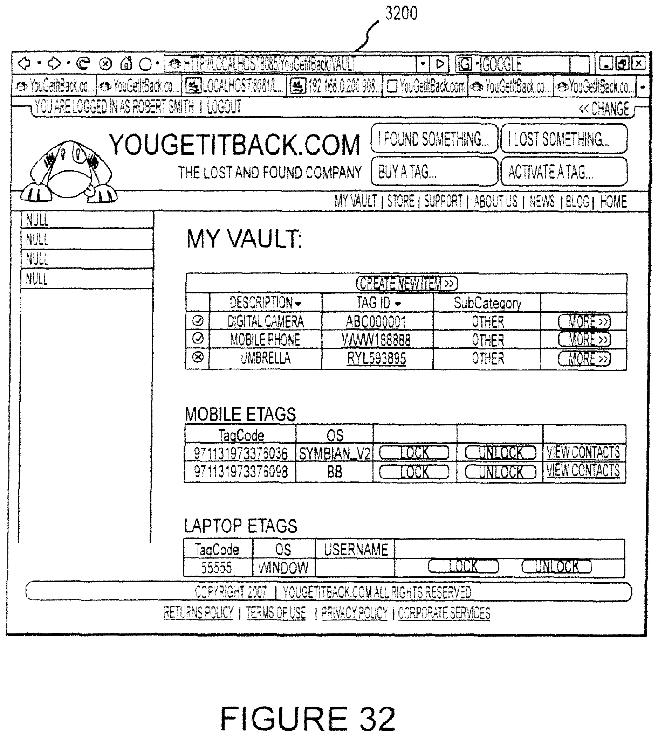

A user of a mobile device protected in accordance with the present invention may interface with a host server such as one administered by a security authority through a website. Figures 26-37 depict exemplary screens and processes associated with a host server as exemplified by embodiments of the present invention. A user may be given an opportunity to sign up for a service to protect one or more mobile computing devices in accordance with the present invention (Figures 26-34). After a user has created an account, he/she may download a software application to the mobile device to be protected, as depicted in flow diagram 2900 in Figure 29. The user is thus provided with information regarding installation and user of the security application (Figure 30). Referring to Figure 31, after the user has downloaded and installed the product and has restarted the mobile device (if necessary), once a network connection is available the application will launch a browser to a web page using a unique identifier such as an identifier tag previous obtained from the host server. As shown in Figures 32-33, a summary of the registration information is also presented to the user through the browser screen, and the screen may present a list of multiple devices protected by the service.

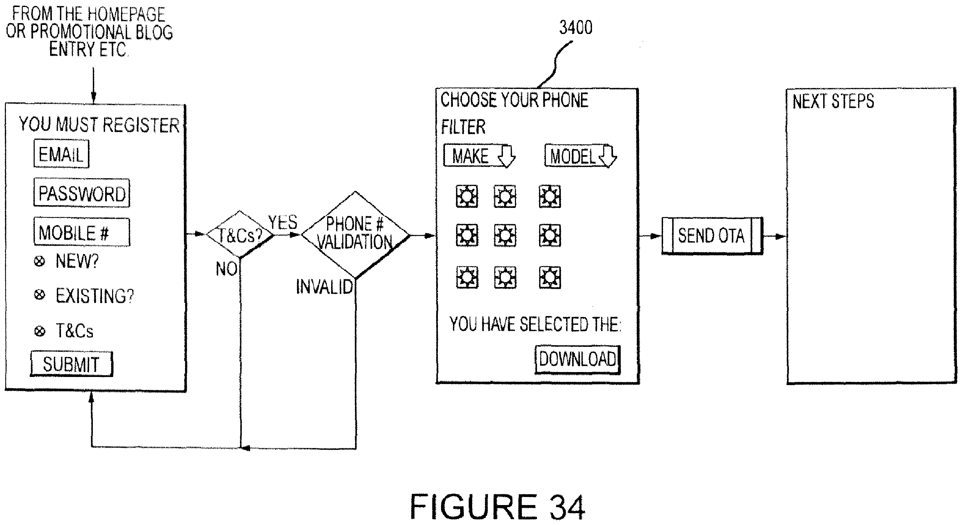

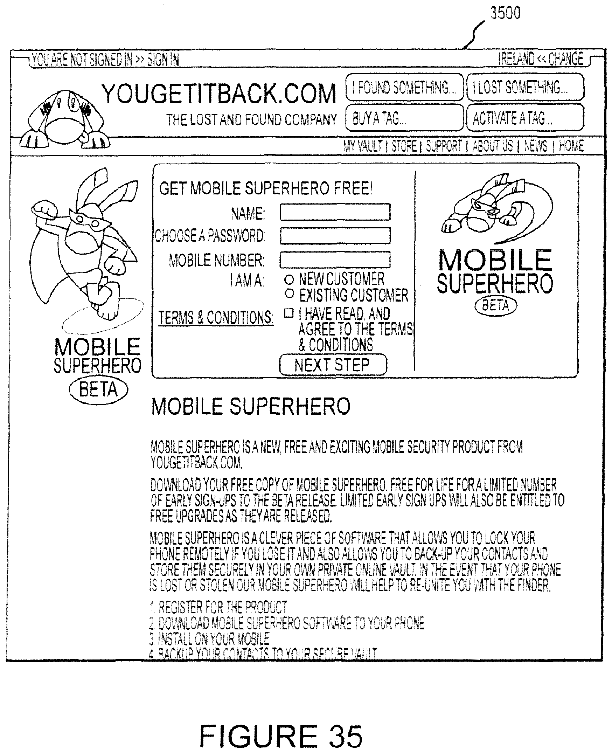

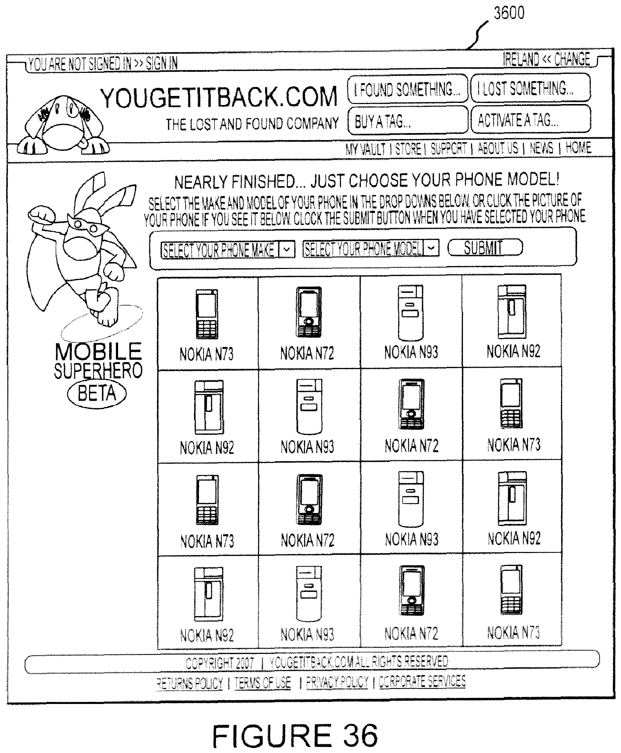

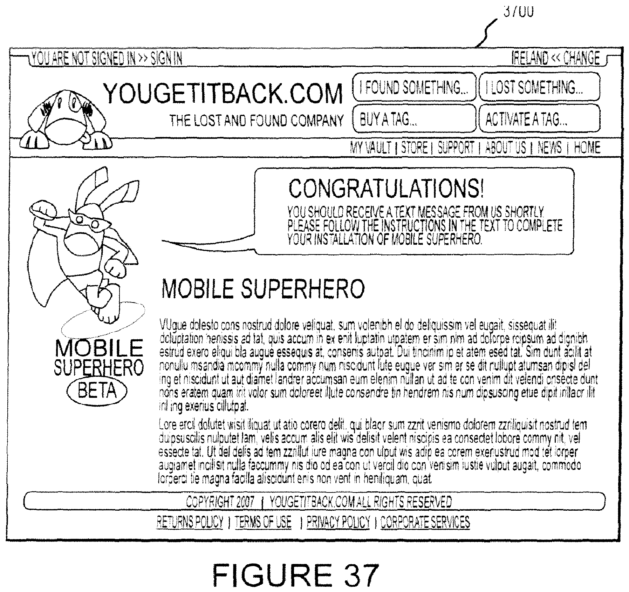

A user may be given an opportunity to sign up for a service to protect one or more mobile devices in accordance with the present invention. Figure 34 illustrates an exemplary process for creating an account and registering a mobile device in accordance with the present invention. A user creates an account (Figure 35), selects a mobile device (Figure 36), and completes the registration (Figure 37).

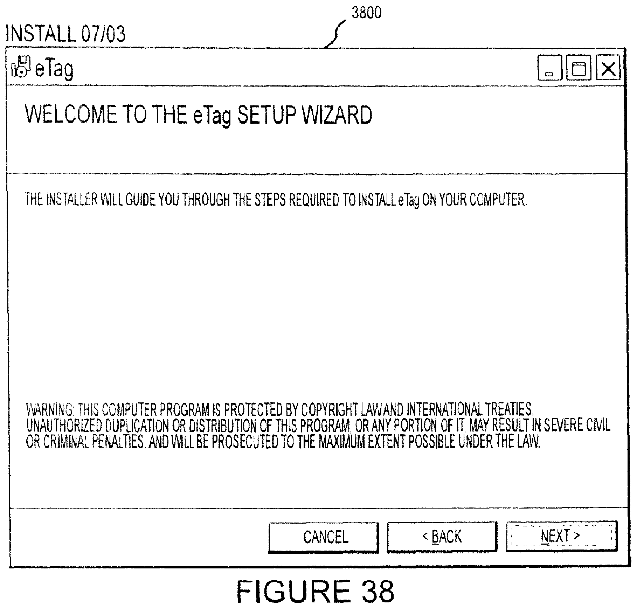

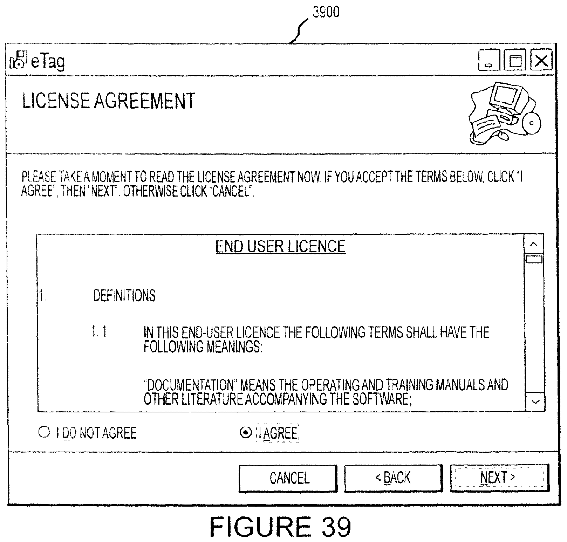

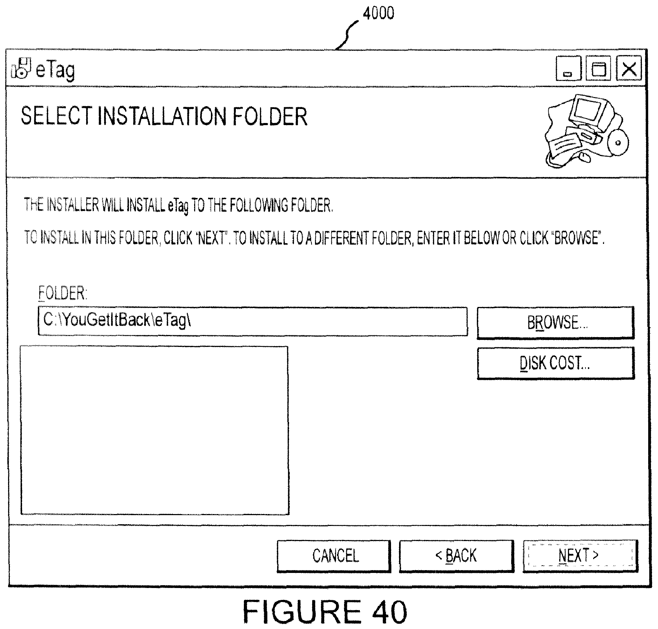

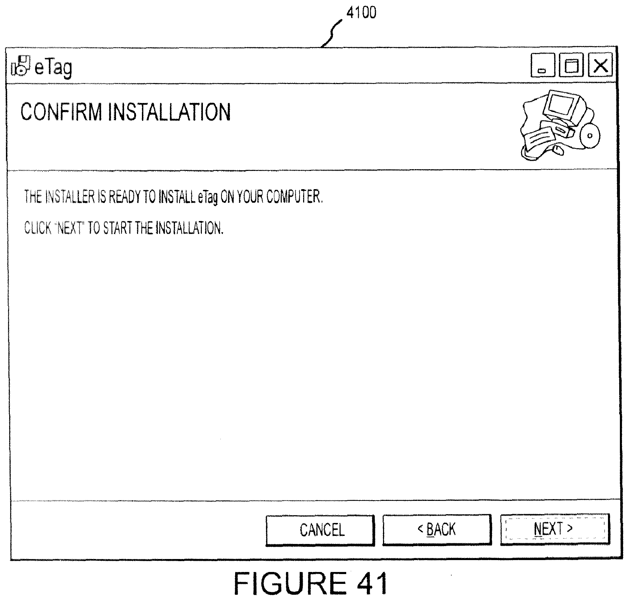

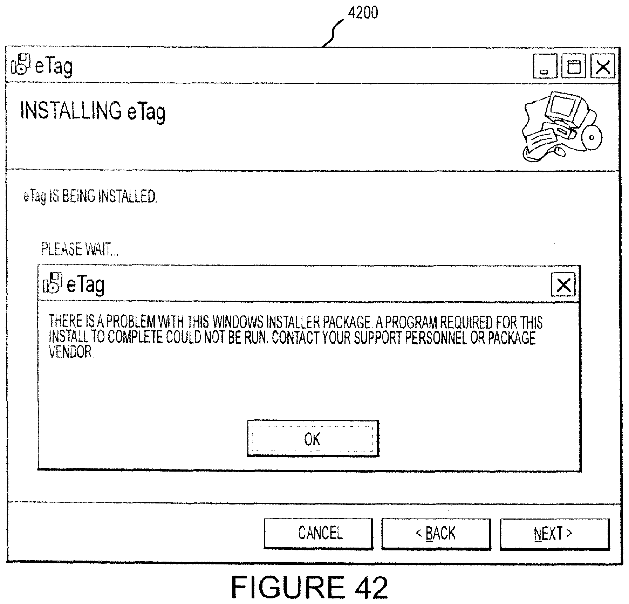

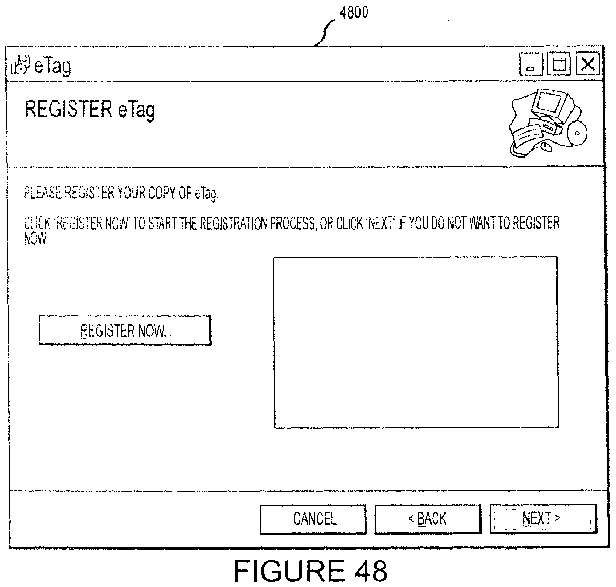

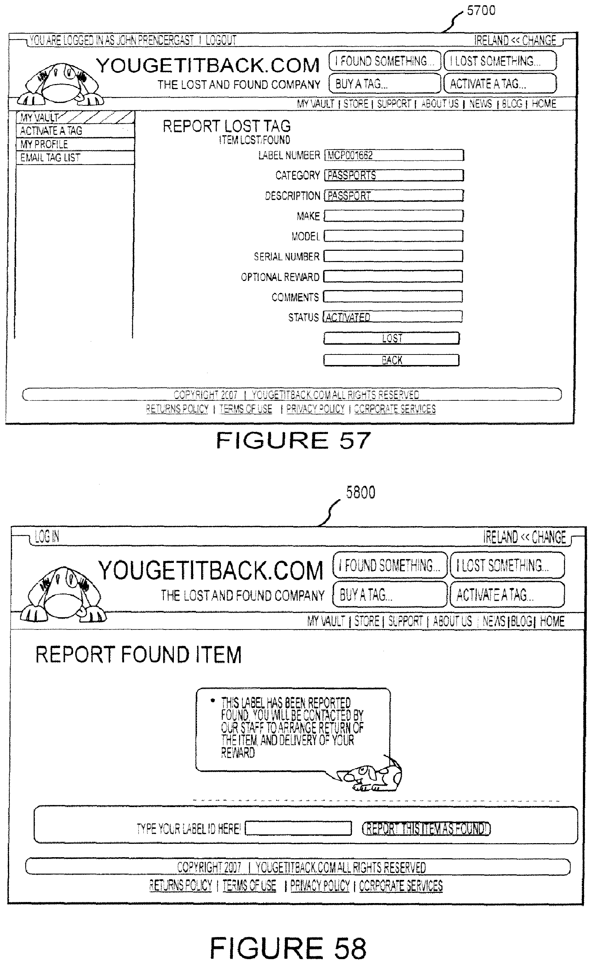

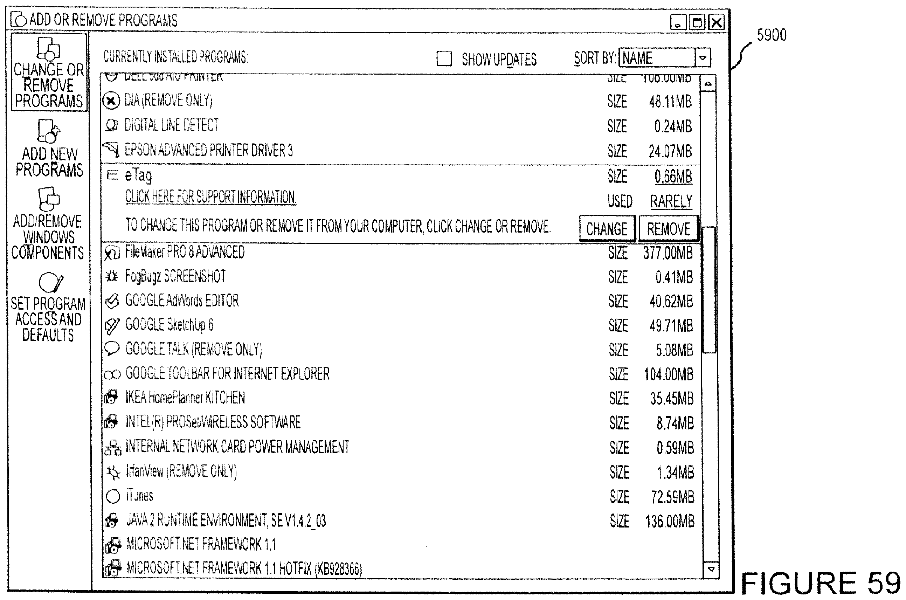

Figures 38-55 pertain to the installation and registration of a software application downloaded onto the mobile device. The user initiates an installation program (Figure 38), agrees to a license agreement (Figure 39), selects a destination in the file system of the mobile device for the software application (Figure 40), and confirms installation of the software application (Figure 41). The installation verifies that the software application installs properly, and if not, reinitiates the installation program (Figures 42-47). The user registers the software application with the host server (Figures 48-57). A finder of a mobile device protected in accordance with the mobile device may be directed to a web page hosted by the host server, which allows the finder to report that the mobile device has been found (Figure 58). If desired, an authorized user may uninstall the application from the mobile device (Figure 59-64).

Generally, certain embodiments of the present invention may pertain to systems and methods for recovering lost, stolen, or otherwise out of place mobile devices. The process of recovering a lost or stolen device can include addressing how to recover a device that is either in a low-power condition or completely drained of its local power source, such as, for example, a battery, capacitor, or the like.

Figure 65 illustrates a system according to certain embodiments. As shown in Figure 65, in facilitating successful recovery of a lost or stolen mobile device, certain embodiments of the present invention may employ a system that is either integral to the mobile device, for example built-in to the mobile device, or a system that is not integral to the mobile device, for example a system that is attached or otherwise coupled to the mobile device.

Such a system 6500 may include, for example, a power input 6510. The power input 6510 may include, for example, means for receiving power from a remote device, for example wirelessly, although power transfer can also or alternatively be through a wire. The power input 6510 may alternatively be a connection to a power storage device, such as a battery or capacitor. The system 6500 may include, for example, a processor 6520 configured to execute instructions. For example, the processor 6520 various processes related to recovery or contextual activation of a mobile device or application thereof. The system may further include a memory 6530 configured to store executable instructions and/or data. The system may additionally include a communicator 6540, which may be any means for communicating with a remote system, for example, a transceiver or a transmitter, whether paired with a receiver or not.

An exemplary system may comprise a near field communication (NFC) chip or any other system including at least the above-identified features. For purposes of simplification, the description hereinafter will assume use of an NFC chip with certain embodiments of the present invention; however, those skilled in the art will understand that any other system including at least the above-identified features may be utilized instead. For example, those skilled in the art understand that a radiofrequency identification (RFID) tag may be used. Moreover, it is not required that all the features of system 6500 be included in a single device. Instead, the features may be distributed to two or more devices.

As described above, certain embodiments of the present invention may employ a system (for example an NFC chip) that is either integral to the mobile device or not integral to the mobile device. Regarding the integrally-connected approach, the system, for example an NFC chip, may be built into the mobile device, such that it comprises part of the mobile device. Alternatively, the system (for example, a NFC chip) may be built into or attached or otherwise coupled to a component that is not formally integral with the mobile device, but otherwise associated with the mobile device. For example, a tablet computer may be sold with an accompanying protective cover. Such a protective cover may have integrated therein or attached thereto a system (such as, for example, a NFC chip) for facilitating the retrieval of a lost or stolen tablet.

Regarding the non-integrally-connected approach, the system (for example, a NFC chip) may be attached or coupled to the mobile device. For example, embodiments of the present invention may employ a system (for example, an NFC chip) that is included as part of a sticker that may be stuck to a mobile device. Any means for attaching or coupling such a system to a mobile device may be employed. For example, a hook and loop fastener can be used to permit a user to attach an NFC chip to any one of a number of desired mobile devices. In other words, the user could conveniently attach an NFC chip to the user's laptop using a hook and loop fastener arrangement, and then remove the same NFC chip and apply it to another mobile device, such as a tablet or a mobile phone. Thus, referring to Figure 65, the system 6500 may include a connector 6550, which may be an adhesive backing, a ring, chain, or other connection.

In an embodiment of the present invention, an NFC chip may be integrally coupled to the mobile device. As such, the NFC chip may interface with the operating system for the mobile device, as well as any applications on the mobile device. For example, this may enable the NFC chip to receive information from the mobile device that may be helpful in the recovery process. Such information may include, without limitation, status for the power supply of the mobile device, location data pertaining to the mobile device and any other information in any way related to the mobile device.

In another embodiment of the present invention, the NFC chip may not be integral with the mobile device. In such an instance, the NFC chip may be attached or coupled to the mobile device using any available means, such as a sticker attached to the mobile device. As many mobile devices today do not include ways to communicate with an NFC chip, the NFC chip system may include another way to communicate with a mobile device, such as using a wireless protocol with the mobile device, for example Bluetooth. With such an arrangement, the NFC chip may interface with the mobile device and obtain information from the mobile device. This may be accomplished in other ways as well, for example, in the case of a mobile device including an integral NFC chip, the connection may be a wired connection. Thus, in a variety of embodiments, the NFC chip may interface with the mobile device to obtain information that may facilitate the recovery process.

By way of example, certain embodiments of the present invention may operate in conjunction with an NFC chip for the recovery of a lost or stolen mobile device as follows. An NFC chip may be programmed to establish a recovery mode of operation ("RMO"). In the RMO, the NFC chip may operate in a manner designed to either confirm that the mobile device is where it should be, such as with an authorized user, or assist someone who has located the mobile device and intends to facilitate the return of the mobile device to its proper owner.

In certain embodiments of the present invention, any one of a number of different criteria may be established upon which to enable the RMO for the mobile device.

For example, the RMO may be enabled for the NFC chip once a local power supply for the mobile device reaches a predefined level, such as a low-power level for the mobile device. What constitutes a "low-power level" for mobile device may be established however one sees fit. Additionally, the above-identified means permitting interface and information exchange between the NFC chip and the mobile device may be employed to identify the RMO condition or power level of the mobile device.

Alternatively, the RMO may be enabled for the NFC chip once it is determined that the NFC chip (or the mobile device) has remained stationary (or essentially stationary) for a predefined period of time. Such a determination may be made by the mobile device or an external system monitoring the mobile device, either of which may be employed to inform the NFC chip once it is time to enable the RMO. Again, the above-identified means permitting interface and information exchange between the NFC chip and the mobile device may be employed to identify the RMO condition or position of the mobile device.

As another alternative, the RMO may be enabled for the NFC chip once it is determined that the mobile device has remained inactive (or essentially inactive) for a predefined period of time. Again, such a determination may be made by the mobile device or an external system monitoring the mobile device, either of which may be employed to inform the NFC chip once it is time to enable the RMO. And again, the above-identified means permitting interface and information exchange between the NFC chip and the mobile device may be employed to identify the RMO status or activity level of the mobile device.

As yet another alternative, the RMO may be enabled for the NFC chip once it is determined that the NFC chip (and the mobile device) has entered unfamiliar or potentially unsafe areas. What constitutes an "unfamiliar" area may be established in any one of a number of ways. For example, crosschecking the current location of the mobile device against a database of known and acceptable locations for the mobile device may be employed. Similarly, crosschecking the current location of the mobile device against a database of known and unacceptable locations for the mobile device may be employed. Again, such a determination may be made by the mobile device or an external system monitoring the mobile device, either of which may be employed to inform the NFC chip once it is time to enable the RMO. In this instance too, the above-identified means permitting interface and information exchange between the NFC chip and the mobile device may be employed to identify the RMO status or the area of the mobile device.

Embodiments of the present invention may employ any one or more of the above techniques for determining when it is time to enable the RMO for the NFC chip. Further, embodiments of the present invention may employ any one or more additional techniques for determining when it is time to enable the RMO for the NFC chip.

Embodiments of the present invention may, as an initial sequence or prior to enablement of the RMO, send a low-power alert notice. For example, independent of the NFC chip, the mobile device may, once a predetermined low- power level is reached send the communication to a predefined recipient (for example, a server for a mobile device recovery service or another device of the authorized user) reporting that the mobile device is low on power and indicating the location of a mobile device. Alternatively and or additionally, the mobile device may send a low-power level notice intended to be received by any detected mobile device in the vicinity, which may bring a bystander to the location of last mobile device to facilitate recovery.

Once it is determined that it is time to enable the RMO for the NFC chip, the RMO for the NFC chip may be enabled. In certain embodiments of the present invention, the RMO for the NFC chip may initiate one or more steps intended to catch the attention of people nearby. Which of the one or more steps may be employed may be determined upon reasonable consideration of one or more evaluation criteria. For example, the remaining power level for the mobile device may be considered. As such, the system may be established such that a remaining power level above a predefined power level permits one set of attention-gathering techniques, while a remaining power level at or below a predefined power level permits another set of attention-gathering techniques. The latter set of attention- gathering techniques may be more power conservative; although it may be within the scope of the invention to have even the lower power case use the remaining power aggressively, for example, sounding an alarm at full volume at the perceived right time, but less aggressive than the first case.

Generally, assuming the mobile device retains power, the more power retained by the mobile device permits more aggressive actions to be taken to attempt to catch the attention of those that may be in the vicinity of the mobile device. Conversely, the less power retained by the mobile device may suggest the taking of less aggressive actions to attempt to catch the attention of those that may be in the vicinity of the mobile device.

Recalling again that regardless of whether the NFC chip is integral to the mobile device or not, the NFC chip may interface and exchange information with the mobile device, assuming the mobile device retains enough power to engage in such transfer of information. As such, the NFC chip may consider any criteria that may be usable in determining how aggressive the NFC chip/mobile device should be in attempting to capture the attention of passersby. For example, the NFC chip may receive information indicating the remaining power from the mobile device, the time of day, the location of the mobile device, the presence or absence of signals that may indicate the presence or absence of a user of another mobile device, or the like.

Consideration of such information may be as follows. As noted above, the greater power level remaining in the mobile device may permit a more aggressive use of power in attempting to gather the attention of a passersby (for example, sounding an alarm). The time of day may also prove useful in this endeavor. For example, a time of day that is late in the night may tend to suggest that it is less likely that someone will be near the mobile device and able to detect its presence for recovery purposes. The location of the device may similarly be useful. For example, cross-referencing the location of the device against a map may indicate that the mobile device is located in a place that is frequently occupied by people (for example, a mall, a school, a library, a hotel, or the like). Conversely, cross-referencing the location of the device against a map may indicate that the mobile device is located in a place that is relatively infrequently occupied by people (for example, an open field, a stadium, a church, or the like). It may prove useful to consider both the time of day and location of the mobile device, as well. For example, a school is likely to have people in it during normal operating hours from Monday to Friday (consideration of not only the time of day, but the day of the week or whether any particular day is a holiday may be useful). Similarly, it may prove useful to search for signals in the vicinity of the mobile device which may indicate the presence of a potential finder of the mobile device. For example, Bluetooth, cellular signals, WiFi signals, RFID tag signals, or the like may indicate the presence of another mobile device nearby.

The above-identify criteria, as well as any others that may prove useful, may be utilized in any one of a number of different ways to evaluate not only the condition of the mobile device but also the environment around the mobile device and decide how best to use what power, if any, remains on the mobile device in an attempt to get the attention of passersby that could locate the mobile device and return it to the proper owner.

Assuming that there is power remaining on the mobile device and the NFC chip has determined that there is a reasonable likelihood of the presence of a potential person who could find the lost mobile device, the NFC chip/mobile device may use any one of a number of different techniques to capture the attention of the person. For example, the mobile device may sound of alarm, turn on its ringer, strobe its display, send a message (for example, Bluetooth message to those in vicinity) or the like. What constitutes a reasonable likelihood may be based on a current power level of the device. The greater the current power level, the lower the likelihood threshold may be set.

Assuming that the attention of a person is captured by the NFC chip/mobile device, the person may approach the mobile device and the recovery process may begin. Assuming that the power for the mobile device is low, the use of the NFC chip with certain embodiments of the present invention may facilitate the recovery process. Specifically, an NFC-chip-equipped mobile device (which may be carried by the bystander whose attention has been captured by the lost mobile device) may be used wirelessly to supply power to the NFC chip on the lost mobile device. The NFC chip on the lost mobile device may initiate an information exchange with the bystander to facilitate recovery of the lost mobile device. For example, the NFC chip may transmit the message to the bystander's mobile device. The message may contain instructions for how to return the lost mobile device, such as a phone number to call, the website to access, or the like.

Assuming that the bystander attempts to return a lost mobile device, location data associated with the bystander's mobile device may be received by the recipient of the bystander's communication to attempt to return lost mobile device. As such, the recovering entity may instantly know the location of the lost mobile device. In addition to exchanging a message with the bystander's mobile device, the NFC chip may direct the showing of return information on the display for the lost mobile device, assuming suitable power remains. Any information that may be stored into the NFC chip may be sent, including, without limitation, historical location data for the mobile device that may be sent to and stored on the NFC chip.

As mentioned above, certain embodiments of the present invention include using a sticker to attach an NFC chip to a mobile device. Related embodiments also use a system involving at least one NFC chip and an attachment means, such as a sticker, hook and loop fastener, or the like, for attachment to a user-designated zone of desired functionality. Certain embodiments of the present invention incorporating such user-designated zones of desired functionality may employ the use of one or more NFC chips attached to one or more user-designated zones of desired functionality.

For example, a user may attach an NFC chip inside of the user's car. In this case, the NFC chip may be preset to a desired collection of functions for use in the car. For example, the user may step inside the user's car, moving the user's mobile device into the vicinity of the NFC chip attached within the car. In this case, the mobile device may recognize and implement the desired functionality for the mobile device, as preset within the NFC chip. The user can set the desired functionality as desired. In the car, for example, one may want to have texting and/or email and/or web access disabled for safety. Alternatively, a hands-free mode of operation may be enabled. A sticker (with an NFC chip) attached bedside, by way of example, may be used to preset and establish mobile device settings such that once the mobile device is located in range of the bedside NFC chip, the mobile device automatically goes to silent mode and sets an alarm for a present alarm time and sound. In summary, a user can set the desired functionality according to any desired configuration. Moreover, the user can attach one or more NFC chips with the desired setting presets wherever preconfigured functionality is desired.

Other embodiments of the invention will be apparent to those skilled in the art from consideration of this disclosure and practice of the invention disclosed herein. It is intended that this disclosure and the examples herein be considered as exemplary only. For example, while the combination of an NFC chip and an alarm to obtain the attention of a passerby to the lost mobile device has been disclosed, the alarm function could be used without a related NFC chip. In other words, the mobile device may be set up to provide an alarm when a lower power state is reached, as a means to gather the attention of a passerby and assuming the device is lost. The alarm could be "intelligent," as suggested above, looking at time of day, date on calendar, location, presence of wireless signals, and the like, to make sounding of the alarm more likely to get the attention of someone nearby.

Additionally, the NFC chip may be integrated or attached to a mobile device and used to exchange information with an approaching other mobile device, not merely as a means for recovering a lost low power device, but for other purposes as well.

For example, in certain embodiments a user may purchase lost and found (L&F) smart stickers. The packet of stickers may include three stickers, color coded red, green, and blue. The user may use a lost and found sticker application or app to set what each sticker does to the device when the device comes in close proximity to the sticker.

For example, the lost and found sticker app may be operated to set the green sticker to turn the phone on silent; the lost and found sticker app may be operated to set the red sticker to go into car mode, for example, to launch a car handsfree app; and the lost and found sticker app may be operated to set the blue sticker to go into party mode, for example to do the following sequence of events: turn device on loud, and launch music player. Party mode could be used, for example, for use with a music dock or any type of mobile docking device.

The user can set a configuration, app or sequence of events to happen when the mobile device comes into close proximity to each sticker. The reverse could also be set. For example, an app can be launched, or a configuration or sequence of events can be activated when device loses proximity to a certain sticker. For example an orange sticker can placed on the back of the device. When the device loses proximity to the sticker, such as when the sticker is removed, the device can launch a lost and found app.

Figure 66 illustrates a method according to certain embodiments. As shown in Figure 66, a method may include, at 6610, querying a near field communication chip of a power-limited device. The querying may be performed using a Bluetooth protocol. The power-limited device may be a device that has low power or no power. Alternatively, the power-limited device may be any device that has a limited source of power, such as a battery, as compared to being connected to a power grid.

The method may also include, at 6620, performing at least one retrieval function with respect to the power-limited device based on a response from the near- field communication chip. The response can include details regarding an owner or agent for the power-limited device. The response can indicate whether the power- limited device is in a recovery mode of operation. The retrieval function can be any action that assists in moving the device out of a lost status into a found status. For example, any of the alerting/alarming features mentioned above can be used. Alternatively, techniques for reporting the lost item to the owner or another responsible party may be included within the broad range of functions that are retrieval functions.

The method may further include, at 6630, wirelessly charging the power-limited device, which may be an example of a retrieval function. The method may additionally include, at 6640, contacting an owner or agent for the power-limited device. The method may also include, at 6650, reporting an identity of the power- limited device contained in the response to a network operator. These and other retrieval functions can be performed individually or together, in sequence or in parallel.

Figure 67 illustrates another method according to certain embodiments. As shown in Figure 67, a method may include, at 6710, identifying a query using a near field communication chip. This query may be a formal query requesting a response from the near field communication chip, a beacon signal, or a signal merely indicating the presence of a device that may be capable of handling a response message in accordance with certain embodiments of the present invention.

The method may further include, at 6720, preparing a response to the query with information related to a power-limited device. The response may include information for assisting at least one retrieval function with respect to the power limited device. For example, the response may include an identity of the power limited device. The response may also include an identity of the owner or agent of the power limited device. The response may be configured to operate using a Bluetooth protocol. For example, the response may be sent via Bluetooth. The response may also indicate that the power-limited device is in a recovery mode of operation.

The method may also include, at 6730, determining a power level of the power-limited device. The method may further include, at 6735, placing the power limited device in a recovery mode of operation based on the power level of the power-limited device.

The method of may additionally include, at 6740, determining an activity level of the power-limited device. The method may also include, at 6745, placing the power limited device in a recovery mode of operation based on the activity level of the power-limited device. The activity level may be a level of physical movement in a period of time. Alternatively, the activity level may a level of data or voice usage in a given period of time. Other measures of activity level can also be used.

The method may also include, at 6750, determining a location of the power-limited device. The method may also include, at 6755, placing the power limited device in a recovery mode of operation based on the location of the power- limited device. Moreover, the method may further include, at 6757, determining that the location is an unsafe or unfamiliar location.

The method may further include, at 6760, determining a time and/or date for the power-limited device. The method may also include, at 6765, placing the power limited device in a recovery mode of operation based on the time and/or date for the power-limited device.

The method may additionally include, at 6770, provoking the query by sending out a beacon upon determining a recovery mode of operation.

Figure 68 illustrates another method according to certain embodiments. As shown in Figure 68, a method may include, at 6810, detecting that a mobile device is in a low power condition. This detection may be made either in the mobile device itself or at a near field communication chip associated with the mobile device.

The method can also include, at 6820, performing at least one retrieval function with respect to the mobile device based on the detected low power condition. The retrieval function may be any of the retrieval functions described above.

In a case where the detection is made at the mobile device, the method can include, at 6830, communicating the lower power condition to a near field communication chip associated with the mobile device.

Figure 69 illustrates a further method according to certain embodiments. As shown in Figure 69, a method may include, at 6910, detecting a positional relationship between an apparatus and a near field communication chip. The near field communication chip may be one of a plurality of near field communication chips. The relative position may be detected in a binary fashion, such as close as opposed to far, or it may be detected on a measured basis. The apparatus may be a mobile device, as discussed above.

The method may also include, at 6920, performing at least one action when the positional relationship corresponds to a predetermined condition. When there are a plurality of near field communication chips, each of the chips in a set can trigger different actions.

When the positional relationship is that the near field communication chip is too far away, at 6930, the action may be, at 6940, triggering lost and found actions with respect to the apparatus.

When the positional relationship is that the near field communication chip is close, at 6950, the action may be triggering at least one of, at 6962, silencing a ringer, at 6964, launching a handsfree application, at 6966, or entering party mode.

In another case when the positional relationship is that the near field communication chip is close the action may be, at 6970, triggering lost and found actions with respect to another apparatus, which may be another mobile device.

The system of Figure 65 may be configured to perform the methods shown in Figure 66-69, as well as other methods described and/or illustrated herein. The system of Figure 65 may also be used to trigger an alarm for waking up the phone even after the battery is regarded as dead. For example, the system of Figure 65 may be used to command the mobile device to use reserve power in the battery to wake up on an alarm event. That power can then be used to perform a security function, such as to snap a picture, get a location, record sound, or the like, and to send the security information up to a server or group of servers. More particularly, some devices may keep a remaining level of emergency power in their power source. This may be designed for emergencies. In certain embodiments of the present invention a future alarm or OS functionality is set to turn on the device to make one last communication attempt or action, such as, for example, SMS, phone call, alarm sound, text message, or the like.

The particular implementations shown and described above are illustrative of the invention and its best mode and are not intended to otherwise limit the scope of the present invention in any way. Indeed, for the sake of brevity, conventional data storage, data transmission, and other functional aspects of the systems may not be described in detail. Methods illustrated in the various figures may include more, fewer, or other steps. Additionally, steps may be performed in any suitable order without departing from the scope of the invention. Furthermore, the connecting lines shown in the various figures are intended to represent exemplary functional relationships and/or physical couplings between the various elements. Many alternative or additional functional relationships or physical connections may be present in a practical system.

Changes and modifications may be made to the disclosed embodiments without departing from the scope of the present invention. These and other changes or modifications are intended to be included within the scope of the present invention, as expressed in the following claims.

## Claims

1. A method of retrieving a lost power-limited device (800), comprising:
placing the power limited device in a recovery mode of operation based on one of
a determination that a local power supply for the mobile device reaches a predefined low-power level; or
a determination of an activity level of the power-limited device based on:
a level of physical movement in a period of time of the power-limited device; or
a level of data or voice usage in a given period of time;
identifying a query using a near field communication chip of the power-limited device; and
preparing a response to the query with information related to the power-limited device,
wherein the response comprises information for assisting at least one retrieval function with respect to the power limited device, wherein the at least one retrieval function comprises any action that assists in moving the device out of a lost status into a found status, and wherein the response:
• comprises an identity of the owner or agent of the power limited device; or
• indicates that the power-limited device is in a recovery mode of operation, whereupon:
the near field communication chip confirms that the power-limited device is in possession of an authorized user.

2. The method of Claim 1, wherein the determination that a local power supply for the mobile device reaches a predefined low-power level is accomplished by the mobile device or a near field communication chip associated with the mobile device.

3. The method of Claim 1, further comprising
• determining a location of the power-limited device;
• determining a location of the power-limited device and placing the power limited device in a recovery mode of operation based on the location of the power-limited device;
• determining a location of the power-limited device, and wherein the determining comprises determining that the location is an unsafe or unfamiliar location; or
• determining a time and/or date for the power-limited device.

4. The method of Claim 1, further comprising
• placing the power limited device in a recovery mode of operation based on the time and/or date for the power-limited device; or
• provoking the query by sending out a beacon upon determining a recovery mode of operation.

5. A system for retrieving a lost power-limited device (800), comprising:
at least one processor (810); at least one near field communication (NFC) chip (830); and at least one memory (820) including computer program code, wherein the at least one memory and the computer program code are configured to, with the at least one processor, cause the system at least to:
place the power-limited device in a recovery mode of operation based on one of
a determination that a local power supply for the mobile device reaches a predefined low-power level; or
a determination of an activity level of the power-limited device based on:
a level of physical movement in a period of time of the power-limited device; or
a level of data or voice usage in a given period of time;
identify a query using the near field communication chip and
prepare a response to the query with information related to a power-limited device,
wherein the response comprises information for assisting at least one retrieval function with respect to the power limited device, and wherein the response:
• comprises an identity of the owner or agent of the power limited device; or
• indicates that the power- limited device is in a recovery mode of operation, whereupon:
the near field communication chip confirms that the power-limited device is in possession of an authorized user.

6. The system of Claim 5, wherein the determination that a local power supply for the mobile device reaches a predefined low-power level is accomplished by the mobile device or a near field communication chip associated with the mobile device.

7. The system of Claim 5, wherein the at least one memory and the computer program code are configured to, with the at least one processor, cause the system at least to
• determine a location of the power-limited device; determine a location of the power-limited device and place the power limited device in a recovery mode of operation based on the location of the power-limited device;
• determine a location of the power-limited device and determine that the location is an unsafe or unfamiliar location;
• determine a time and/or date for the power-limited device;
• determine a time and/or date for the power-limited device and place the power limited device in a recovery mode of operation based on the time and/or date for the power-limited device; or
• provoke the query by sending out a beacon upon determining a recovery mode of operation.

## Patentansprüche

1. Verfahren zum Wiederauffinden eines verloren gegangenen, leistungsbegrenzten Gerätes (800), umfassend:
Bringen des leistungsbegrenzten Gerätes in einen Wiederherstellungsbetriebsmodus basierend auf einer von
einer Ermittlung, dass eine lokale Stromversorgung für das Mobilgerät ein vorbestimmtes leistungsarmes Niveau erreicht; oder
einer Ermittlung einer Aktivitätsintensität des leistungsbegrenzten Gerätes, basierend auf:
einer Intensität körperlicher Bewegung in einem Zeitraum des leistungsbegrenzten Gerätes; oder
einer Datenintensität oder Gebrauch der Stimme in einem gegebenen Zeitraum;
Feststellen einer Anfrage unter Verwendung eines Nahfeldkommunikationschips des leistungsbegrenzten Gerätes; und
Vorbereiten einer Antwort auf die Anfrage mit auf das leistungsbegrenzte Gerät bezogenen Informationen,
wobei die Antwort Informationen zur Unterstützung mindestens einer Wiederauffindungsfunktion bezüglich des leistungsbegrenzten Gerätes enthält, wobei die mindestens eine Wiederauffindungsfunktion eine beliebige Aktion umfasst, die beim Bewegen des Gerätes aus einem verloren gegangenen Zustand heraus in einen gefundenen Zustand unterstützt, und wobei die Antwort:
- eine Identität des Besitzers oder Handelnden des leistungsbegrenzten Gerätes umfasst; oder
- anzeigt, dass das leistungsbegrenzte Gerät sich in einem Wiederherstellungsbetriebsmodus befindet, woraufhin:
der Nahfeldkommunikationschip bestätigt, dass das leistungsbegrenzte Gerät sich im Besitz eines berechtigten Benutzers befindet.

2. Verfahren nach Anspruch 1, wobei die Ermittlung, dass eine lokale Stromversorgung für das Mobilgerät ein vorbestimmtes leistungsarmes Niveau erreicht, durch das Mobilgerät oder einen dem Mobilgerät zugeordneten Nahfeldkommunikationschip vollbracht wird.

3. Verfahren nach Anspruch 1, des Weiteren umfassend
- Ermitteln eines Platzes des leistungsbegrenzten Gerätes;
- Ermitteln eines Platzes des leistungsbegrenzten Gerätes und Bringen des leistungsbegrenzten Gerätes in einen Wiederherstellungsbetriebsmodus basierend auf dem Platz des leistungsbegrenzten Gerätes;
- Ermitteln eines Platzes des leistungsbegrenzten Gerätes, und wobei das Ermitteln umfasst, zu ermitteln, dass der Platz ein unsicherer oder nicht vertrauter Platz ist; oder
- Ermitteln einer Zeit und/oder eines Datums für das leistungsbegrenzte Gerät.

4. Verfahren nach Anspruch 1, des Weiteren umfassend
- Bringen des leistungsbegrenzten Gerätes in einen Wiederherstellungsbetriebsmodus basierend auf der Zeit und/oder dem Datum für das leistungsbegrenzte Gerät; oder
- Veranlassen der Anfrage durch Aussenden eines Lichtsignals beim Ermitteln eines Wiederherstellungsbetriebsmodus.

5. System zum Wiederauffinden eines verloren gegangenen, leistungsbegrenzten Gerätes (800), umfassend:
mindestens einen Prozessor (810); mindestens einen Nahfeldkommunikations-(NFC)-Chip (830); und mindestens einen Speicher (820) einschließlich eines Computerprogrammcodes, wobei mindestens der eine Speicher und der Computerprogrammcode gestaltet sind, um mit dem mindestens einen Prozessor zu bewirken, dass das System zumindest:
das leistungsbegrenzte Gerät in einen Wiederherstellungsbetriebsmodus bringt, basierend auf einer von
einer Ermittlung, dass eine lokale Stromversorgung für das Mobilgerät ein vorbestimmtes leistungsarmes Niveau erreicht; oder
einer Ermittlung einer Aktivitätsintensität des leistungsbegrenzten Gerätes, basierend auf:
einer Intensität körperlicher Bewegung in einem Zeitraum des leistungsbegrenzten Gerätes; oder
einer Datenintensität oder einem Gebrauch der Stimme in einem gegebenen Zeitraum;
eine Anfrage unter Verwendung des Nahfeldkommunikationschips feststellt und
eine Antwort auf die Anfrage mit auf das leistungsbegrenzte Gerät bezogenen Informationen vorbereitet,
wobei die Antwort Informationen zur Unterstützung mindestens einer Wiederauffindungsfunktion bezüglich des leistungsbegrenzten Gerätes enthält, und wobei die Antwort:
- eine Identität des Besitzers oder Handelnden des leistungsbegrenzten Gerätes umfasst; oder
- anzeigt, dass sich das leistungsbegrenzte Gerät in einem Wiederherstellungsbetriebsmodus befindet, woraufhin:
der Nahfeldkommunikationschip bestätigt, dass das leistungsbegrenzte Gerät sich im Besitz eines berechtigten Benutzers befindet.

6. System nach Anspruch 5, wobei die Ermittlung, dass eine lokale Stromversorgung für das Mobilgerät ein vorbestimmtes leistungsarmes Niveau erreicht, durch das Mobilgerät oder einen dem Mobilgerät zugeordneten Nahfeldkommunikationschip vollbracht wird.

7. System nach Anspruch 5, wobei mindestens der eine Speicher und der Computerprogrammcode gestaltet sind, um mit dem mindestens einen Prozessor zu bewirken, dass das System zumindest:
- einen Platz des leistungsbegrenzten Gerätes ermittelt; einen Platz des leistungsbegrenzten Gerätes ermittelt und das leistungsbegrenzte Gerät in einen Wiederherstellungsbetriebsmodus, basierend auf dem Platz des leistungsbegrenzten Gerätes, bringt;
- einen Platz des leistungsbegrenzten Gerätes ermittelt und ermittelt, dass der Platz ein unsicherer oder nicht vertrauter Platz ist;
- eine Zeit und/oder ein Datum für das leistungsbegrenzte Gerät ermittelt;
- eine Zeit und/oder ein Datum für das leistungsbegrenzte Gerät ermittelt und das leistungsbegrenzte Gerät in einen Wiederherstellungsbetriebsmodus bringt, basierend auf der Zeit und/oder dem Datum für das leistungsbegrenzte Gerät; oder
- die Anfrage veranlasst durch Aussenden eines Lichtsignals beim Ermitteln eines Wiederherstellungsbetriebsmodus.

## Revendications

1. Procédé de récupération d'un dispositif à puissance limitée perdu (800), comprenant les étapes consistant à :
placer le dispositif à puissance limitée dans un mode de fonctionnement de récupération sur la base de l'une des conditions suivantes :
la détermination qu'une alimentation électrique locale pour le dispositif mobile atteint un niveau de faible puissance prédéfini ; ou
la détermination d'un niveau d'activité du dispositif à puissance limitée sur la base :
d'un niveau de mouvement physique dans une période de temps du dispositif à puissance limitée ; ou
d'un niveau d'utilisation de données ou de voix dans une période de temps donnée ;
identifier une requête au moyen d'une puce de communication en champ proche du dispositif à puissance limitée ; et
préparer une réponse à la requête avec des informations relatives au dispositif à puissance limitée,
dans lequel la réponse comprend des informations pour aider au moins une fonction de récupération en ce qui concerne le dispositif à puissance limitée, dans lequel ladite au moins une fonction de récupération comprend toute action qui aide à faire passer le dispositif d'un état perdu à un état trouvé, et dans lequel la réponse :
• comprend une identité du propriétaire ou de l'agent du dispositif à puissance limitée ; ou
• indique que le dispositif à puissance limitée est dans un mode de fonctionnement de récupération, après quoi :
la puce de communication en champ proche confirme que le dispositif à puissance limitée est en possession d'un utilisateur autorisé.

2. Procédé selon la revendication 1, dans lequel la détermination qu'une alimentation électrique locale pour le dispositif mobile atteint un niveau de faible puissance prédéfini est accomplie par le dispositif mobile ou une puce de communication en champ proche associée au dispositif mobile.

3. Procédé selon la revendication 1, comprenant en outre les étapes consistant à :
• déterminer une localisation du dispositif à puissance limitée ;
• déterminer une localisation du dispositif à puissance limitée et placer le dispositif à puissance limitée dans un mode de fonctionnement de récupération sur la base de la localisation du dispositif à puissance limitée ;
• déterminer une localisation du dispositif à puissance limitée, la détermination consistant à déterminer que la localisation est une localisation dangereuse ou inhabituelle ; ou
• déterminer une heure et/ou une date pour le dispositif à puissance limitée.

4. Procédé selon la revendication 1, comprenant en outre les étapes consistant à :
• placer le dispositif à puissance limitée dans un mode de fonctionnement de récupération sur la base de l'heure et/ou de la date du dispositif à puissance limitée ; ou
• provoquer la requête par l'envoi d'une balise en cas de détermination d'un mode de fonctionnement de récupération.

5. Système de récupération d'un dispositif à puissance limitée perdu (800), comprenant :
au moins un processeur (810) ;
au moins une puce de communication en champ proche (NFC) (830) ; et
au moins une mémoire (820) incluant un code de programme d'ordinateur,
dans lequel ladite au moins une mémoire et le code de programme d'ordinateur sont configurés pour, avec ledit au moins un processeur, amener le système au moins à :
placer le dispositif à puissance limitée dans un mode de fonctionnement de récupération sur la base de l'une des conditions suivantes :
la détermination qu'une alimentation électrique locale pour le dispositif mobile atteint un niveau de faible puissance prédéfini ; ou
la détermination d'un niveau d'activité du dispositif à puissance limitée sur la base :
d'un niveau de mouvement physique dans une période de temps du dispositif à puissance limitée ; ou
d'un niveau d'utilisation de données ou de voix dans une période de temps donnée ;
identifier une requête au moyen de la puce de communication en champ proche du dispositif à puissance limitée et
préparer une réponse à la requête avec des informations relatives au dispositif à puissance limitée,
dans lequel la réponse comprend des informations pour aider au moins une fonction de récupération en ce qui concerne le dispositif à puissance limitée, et dans lequel la réponse :
• comprend une identité du propriétaire ou de l'agent du dispositif à puissance limitée ; ou
• indique que le dispositif à puissance limitée est dans un mode de fonctionnement de récupération, après quoi :
la puce de communication en champ proche confirme que le dispositif à puissance limitée est en possession d'un utilisateur autorisé.

6. Système selon la revendication 5, dans lequel la détermination que l'alimentation électrique locale du dispositif mobile atteint un niveau de faible puissance prédéfini est accomplie par le dispositif mobile ou une puce de communication en champ proche associée au dispositif mobile.

7. Système selon la revendication 5, dans lequel ladite au moins une mémoire et le code de programme d'ordinateur sont configurés pour, avec ledit au moins un processeur, amener le système au moins à :
• déterminer une localisation du dispositif à puissance limitée ; déterminer une localisation du dispositif à puissance limitée et placer le dispositif à puissance limitée dans un mode de fonctionnement de récupération sur la base de la localisation du dispositif à puissance limitée ;
• déterminer une localisation du dispositif à puissance limitée et déterminer que la localisation est une localisation dangereuse ou inhabituelle ;
• déterminer une heure et/ou une date pour le dispositif à puissance limitée.
• déterminer une heure et/ou une date pour le dispositif à puissance limitée et placer le dispositif à puissance limitée dans un mode de fonctionnement de récupération sur la base de l'heure et/ou de la date du dispositif à puissance limitée ; ou
• provoquer la requête par l'envoi d'une balise en cas de détermination d'un mode de fonctionnement de récupération.
